# EUROPÄISCHE PATENTSCHRIFT

(11) **EP 3 666 560 B1**
(45) Veröffentlichungstag und Bekanntmachung des Hinweises auf die Patenterteilung: **10.08.2022**
(21) Anmeldenummer: 18211706.9
(22) Anmeldetag: 11.12.2018
(51) Int. Cl.: B60D 1/64, B60L 1/14, H01R 13/629

(54) **MULTIFUNKTIONSVERBINDER**
MULTI-FUNCTION CONNECTOR
CONNECTEUR MULTIFONCTION

(43) Veröffentlichungstag der Anmeldung: 17.06.2020
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 1 852 283
- EP-A1- 2 472 162
- EP-A2- 0 549 178
- DE-A1- 2 900 866
- DE-A1-102017 200 743
- JP-A- H01 268 402

## Beschreibung

### Technisches Gebiet

Die vorliegende Erfindung betrifft einen Multifunktionsverbinder für ein Fahrzeug oder einen Fahrzeuganhänger zum Verbinden und Trennen von Verbindungselementen von Leitungen. Bei diesen Leitungen handelt es sich insbesondere um elektrische Leitungen und/oder Hydraulikleitungen und/oder Pneumatikleitungen. Des Weiteren betrifft die vorliegende Erfindung eine Baueinheit mit einem Aufnahmeelement und einem Parallelogrammmechanismus.

### Hintergrund

Neben einer mechanischen Anbindung eines Anhängers an einem Zugfahrzeug ist beispielsweise zur Übertragung elektrischen Stroms für Beleuchtungseinrichtungen des Anhängers zudem eine elektrische Verbindung erforderlich. Da die elektrische Verbindung beim Abkuppeln des Anhängers von dem Zugfahrzeug gelöst werden muss, wird die elektrische Verbindung zugfahrzeugseitiger und anhängerseitiger elektrischer Leitungen üblicherweise anhand von Steckern vorgenommen.

Neben einer elektrischen Verbindung können beispielsweise insbesondere bei landwirtschaftlichen Zugmaschinen des Weiteren Hydraulik- oder Pneumatikverbindungen oder Verbindungen von Leitungen für Wasser oder Düngemittel zwischen dem Zugfahrzeug und dem Anhänger erforderlich sein, die ebenfalls über geeignete Verbindungselemente zwischen entsprechenden zugfahrzeugseitigen und anhängerseitigen Schläuchen vorgenommen werden. Je nach Anwendungsbereich kommen pro Zugfahrzeug und Anhänger mehrere Verbindungselemente zum Einsatz, die bei jedem Anhängen des Anhängers an dem Zugfahrzeug verbunden und bei jedem Abkuppeln des Anhängers von dem Zugfahrzeug getrennt werden müssen, was mit Arbeitsaufwand verbunden ist. Zudem besteht insbesondere bei schlechter Beleuchtung die Gefahr, die Verbindungselemente verschiedener Leitungen miteinander zu vertauschen und die Verbindungselemente zweier nicht zusammengehörender Leitungen miteinander zu verbinden.

Die EP 0 522 493 B2 offenbart eine Schellkupplung zum jeweils gleichzeitigen Herstellen oder Lösen von Verbindungen mehrerer Anschlussstecker und/oder Kupplungen. Die Schnellkupplung weist zwei Tragplatten auf, an denen Muffenteile und Steckerteile von Hydraulik-, Pneumatik- und/oder elektrischen Energieübertragungseinrichtungen sitzen. Die Tragplatten werden zur Herstellung einer Verbindung zwischen den Steckern und/oder Kupplungen mittels eines Spannhebels aneinander gepresst. Im Falle von Hydraulikkupplungen kommen federbelastete Flachdichtkupplungen ohne Sperrkugelverriegelung zum Einsatz. Die relative Anordnung der Tragplatten zueinander wird durch Führungsstifte und dazu passende Führungsöffnungen in den Tragplatten bestimmt. Die DE 10 2017 200 743 A1 offenbart einen Kopplungsmechanismus, durch den zwei Verbindungsblöcke zwischen einer Aufnahme- und einer Koppelstellung bewegt werden. Der Kopplungsmechanismus weist drehbare Glieder und Rollstifte, die in Nockenschlitzen der drehbaren Glieder geführt werden, auf.

Die EP 0 787 905 B1 offenbart eine Einheit zur Verteilung eines Druckmediums, die aus einer Zwischenplatte und einem Hydraulikblock besteht. Die Zwischenplatte und der Hydraulikblock weisen jeweils eine geschliffene Fläche auf. Im verbundenen Zustand der Zwischenplatte und des Hydraulikblocks liegen die geschliffenen Flächen aufeinander. Aus der Zwischenplatte ragen Anschlussstutzen heraus, die sich in entsprechende, im Hydraulikblock ausgebildete Bohrungen einführen lassen. Die Zwischenplatte wird mit Hilfe von Schrauben fest mit dem Hydraulikblock verbunden, so dass die geschliffene Fläche der Zwischenplatte fest gegen die geschliffene Fläche des Hydraulikblocks gedrückt wird und damit eine Dichtwirkung zwischen der Zwischenplatte und dem Hydraulikblock erreicht wird.

Die EP 2 476 941 B1 offenbart eine Vorrichtung zum gleichzeitigen Anschließen mehrerer Hydraulik- oder Stromleitungen. Die Vorrichtung weist zwei plattenartige Elemente auf, in denen jeweils zueinander komplementäre Kupplungen vorgesehen sind. Die zueinander komplementären Kupplungen der beiden plattenartigen Elemente werden über einen Hebel miteinander verbunden, durch den die beiden plattenartigen Elemente aneinander gedrückt werden.

Die WO 2015/086648 A1 offenbart eine weitere Schnellkupplung für mehrere Hydraulik-, Strom- und/oder Pneumatikleitungen, die zwei Platten aufweist, durch die mehrere Kupplungen gehalten werden. Die beiden Platten und die dadurch gehaltenen Kupplungen sind durch einen Hebel miteinander verbindbar. Bei den Kupplungen handelt es sich teilweise um speziell ausgebildete Kupplungen. Anstatt die beiden Platten miteinander zu verbinden, können auch einzelne Kupplungen mit Kupplungen einer der beiden Platten verbunden werden, falls die Verbindungen über die weiteren Kupplungen für einen konkreten Anwendungsfall nicht erforderlich sind.

Bei den genannten Vorrichtungen erfolgt eine sichere und dichte Verbindung der komplementären Kupplungen durch aneinander anliegende bzw. aneinandergepresste Platten. Um eine sichere Führung der Platten beim Verbinden der Platten zu gewährleisten und ein Verkanten der Kupplungen zu vermeiden, sind teilweise Führungselemente erforderlich. Teilweise müssen speziell für die Vorrichtung ausgebildete Stecker bzw. Verbindungselemente für die Strom-, Hydraulik- und/oder Pneumatikleitungen verwendet werden, während die Verwendung handelsüblicher Stecker bzw. Verbindungselemente oft aufgrund der besonderen Ausgestaltung der Vorrichtungen nicht möglich ist.

Bei der in der EP 0 787 905 B1 offenbarten Einheit erfolgt die Verbindung der Zwischenplatte und des Hydraulikblocks über Schrauben. Das Festziehen und Lösen der Schrauben beim Verbinden bzw. Trennen der Zwischenplatte und des Hydraulikblocks erfordert Arbeits- und Zeitaufwand.

Ein der Erfindung zu Grunde liegendes Problem besteht darin, einen Multifunktionsverbinder vorzusehen, der eine einfache, schnelle und sichere Verbindung und Trennung zugfahrzeugseitiger und anhängerseitiger elektrischer Leitungen und/oder Hydraulik-/Pneumatikleitungen unter Verwendung handelsüblicher Verbindungselemente, insbesondere Stecker und Buchsen und/oder Kupplungen mit ineinandergreifenden Stecker- und Muffenteilen, erlaubt.

### Darstellung der Erfindung

Die Erfindung ist im beigefügten Anspruchssatz beschrieben.

Gemäß einem Aspekt der vorliegenden Offenbarung weist ein Multifunktionsverbinder für ein Fahrzeug oder einen Fahrzeuganhänger zum Verbinden und Trennen von Verbindungselementen von Leitungen, insbesondere von elektrischen Leitungen und/oder Hydraulikleitungen und/oder Pneumatikleitungen, ein erstes Aufnahmeelement zur Aufnahme mindestens eines ersten Verbindungselements, ein zweites Aufnahmeelement zur Aufnahme mindestens eines mit dem ersten Verbindungselement verbindbaren zweiten Verbindungselements, und einen Parallelogrammmechanismus auf. Der Parallelogrammmechanismus ist dazu ausgebildet, das zweite Aufnahmeelement im Wesentlichen linear entlang einer Verbindungsrichtung des ersten Verbindungselements und des zweiten Verbindungselements zwischen einem geöffneten Zustand, in dem das ersten Verbindungselement und das zweite Verbindungselement voneinander getrennt sind, und einem geschlossenen Zustand, in dem das erste Verbindungselement und das zweite Verbindungselement miteinander verbunden sind, relativ zu dem ersten Aufnahmeelement zu bewegen. Der Begriff "im Wesentlichen linear" bedeutet in diesem Zusammenhang, dass die Bewegung annähernd entlang einer Geraden, beispielsweise in horizontaler Richtung, erfolgt, wobei eine geringe Abweichung von der Geraden, beispielsweise eine Abweichung von bis zu 10 mm oder bis zu 5 mm in der vertikalen Richtung, möglich ist. In der horizontalen Richtung ist eine Abweichung von bis zu 10 mm oder bis zu 5 mm oder bis zu 2 mm oder bis zu 1 mm möglich.

Unter einem Parallelogrammmechanismus ist allgemein beispielsweise eine Parallelogrammführung zu verstehen, die zwei parallel zueinander geführte Lenker aufweist. Mittels der beiden Lenker werden ein erstes Element und ein zweites Element relativ zueinander bewegt, ohne ihre Ausrichtung zueinander zu verändern, d.h., ohne relativ zueinander verdreht zu werden. Jeder der beiden Lenker ist an einem ersten Drehpunkt drehbar mit dem ersten Element verbunden und ist an einem zweiten Drehpunkt drehbar mit dem zweiten Element verbunden, wobei die Drehachsen parallel zueinander sind. Die Abstände zwischen dem ersten Drehpunkt und dem zweiten Drehpunkt sind bei beiden Lenkern gleich. Zudem sind der Abstand zwischen den ersten Drehpunkten und der Abstand zwischen den zweiten Drehpunkten gleich. Die Drehpunkte liegen in einer Ebene senkrecht zu den Drehachsen der Drehpunkte und bilden die Ecken eines Parallelogramms, wobei die beiden Lenker zwei gegenüberliegende Seiten des Parallelogramms bilden.

Mit anderen Worten, mit Hilfe eines Parallelogrammmechanismus kann ein an einem Hebel befestigtes Element auch bei Bewegung entlang der Bahn des Hebels im ursprünglichen Neigungswinkel (in der Ebene der Hebelbahn) gehalten werden. D.h., die Winkellage des Elements wird bei der Bewegung beibehalten. Entsprechend der Definition eines Parallelogramms werden in einem Parallelogrammmechanismus zwei gleich lange Lenker verwendet, die auf Achsen im Last- und Drehpunkt gelagert sind und an ihrem anderen Ende über einen weiteren Lenker in der Länge des Hebelarms miteinander verbunden sind (siehe Wikipedia-Artikel "Parallelogrammführung").

Bei dem Multifunktionsverbinder werden durch den Parallelogrammmechanismus das erste Aufnahmeelement und das zweite Aufnahmeelement im Wesentlichen linear entlang der Verbindungsrichtung des ersten Verbindungselements und des zweiten Verbindungselements, d.h. in der Richtung, in der das erste Verbindungselement und das zweite Verbindungselement miteinander verbunden werden (beispielsweise die Richtung, in der zwei zueinander komplementäre Stecker oder Schlauchkupplungen ineinandergesteckt werden), relativ zueinander bewegt, ohne zu verkippen oder verdreht zu werden. Dadurch werden Probleme beim Verbinden der Verbindungselemente, wie beispielsweise ein Verkanten, vermieden. Die Verwendung zusätzlicher Führungselemente, wie beispielsweise Führungsstifte, ist nicht zwangsläufig erforderlich. Durch die Anordnung der Verbindungselemente an den Aufnahmeelementen ist ein schnelles, sicheres, insbesondere vertauschsicheres, paralleles und gleichzeitiges Verbinden und Trennen bzw. Kuppeln und Entkuppeln mehrerer Verbindungselemente möglich. Ein unbeabsichtigtes Vertauschen von Verbindungselementen wird vermieden, da die Verbindungselemente fest an den Aufnahmeelementen angebracht werden können.

An dem Parallelogrammmechanismus kann eine Kraftaufbringungseinheit zur Scherung des Parallelogrammmechanismus, d.h. für einen Übergang von dem geöffneten Zustand in den geschlossenen Zustand und umgekehrt, vorgesehen sein. Die Kraftaufbringungseinheit kann beispielsweise ein Hebel oder eine andere mechanische, elektrische, pneumatische oder hydraulische Vorrichtung sein.

Das erste Aufnahmeelement ist zur Aufnahme mindestens eines ersten Verbindungselements, d.h. eines oder mehrerer erster Verbindungselemente, ausgebildet. Das zweite Aufnahmeelement ist zur Aufnahme mindestens eines zweiten Verbindungselements, d.h. eines oder mehrerer zweiter Verbindungselemente ausgebildet.

Der Parallelogrammmechanismus kann eine Halterung zur Anbringung des zweiten Aufnahmeelements, ein erstes Seitenelement (erster Lenker), das das erste Aufnahmeelement und die Halterung miteinander verbindet, und das in einer ersten Ebene parallel zu der Verbindungsrichtung des ersten Verbindungselements und des zweiten Verbindungselements relativ zu dem ersten Aufnahmeelement und der Halterung schwenkbar ist, und ein zweites Seitenelement (zweiter Lenker), das das erste Aufnahmeelement und die Halterung miteinander verbindet, und das in einer zweiten Ebene, die identisch oder parallel zu der ersten Ebene ist, relativ zu dem ersten Aufnahmeelement und der Halterung schwenkbar ist, aufweisen. Das zweite Seitenelement kann in der Verbindungsrichtung des ersten Verbindungselements und des zweiten Verbindungselements relativ zu dem ersten Seitenelement versetzt sein.

Das erste Seitenelement kann an einem ersten Verbindungspunkt gelenkig mit dem ersten Aufnahmeelement verbunden sein und an einem zweiten Verbindungspunkt gelenkig mit der Halterung verbunden sein. Das zweite Seitenelement kann an einem dritten Verbindungspunkt gelenkig mit dem ersten Aufnahmeelement verbunden sein und an einem vierten Verbindungspunkt gelenkig mit der Halterung verbunden sein. Die Verbindungspunkte des ersten Seitenelements und des zweiten Seitenelements mit dem ersten Aufnahmeelement und der Halterung können in einer Richtung senkrecht zu der ersten Ebene und der zweiten Ebene betrachtet an den Eckpunkten eines Parallelogramms angeordnet sein.

Das erste Seitenelement kann ein längliches Bauteil, beispielsweise ein Flacheisen, sein. Ein erstes Ende des ersten Seitenelements in der Längserstreckungsrichtung des ersten Seitenelements kann gelenkig mit dem ersten Aufnahmeelement verbunden sein, und ein zweites Ende des ersten Seitenelements in der Längserstreckungsrichtung kann gelenkig mit der Halterung verbunden sein. Das zweite Seitenelement kann ein längliches Bauteil, beispielweise ein Flacheisen, sein. Ein erstes Ende des zweiten Seitenelements in der Längserstreckungsrichtung des zweiten Seitenelements kann gelenkig mit dem ersten Aufhahmeelement verbunden sein, und ein zweites Ende des zweiten Seitenelements in der Längserstreckungsrichtung kann gelenkig mit der Halterung verbunden sein. Die Längserstreckungsrichtung des ersten Seitenelements kann im Wesentlichen parallel zu der Längserstreckungsrichtung des zweiten Seitenelements verlaufen.

Der Parallelogrammmechanismus kann ferner ein Drehelement, das an dem ersten Aufnahmeelement angebracht und um eine erste Achse senkrecht zu der ersten Ebene und der zweiten Ebene relativ zu dem ersten Aufnahmeelement drehbar ist, und ein Zwischenelement, das gelenkig mit dem ersten Seitenelement verbunden ist und gelenkig mit einem exzentrischen Abschnitt des Drehelements verbunden ist, aufweisen. Das Zwischenelement kann so mit dem ersten Seitenelement verbunden sein, dass das erste Seitenelement durch eine mit einer Drehung des Drehelements um die erste Achse verbundenen Bewegung des Zwischenelements in der ersten Ebene relativ zu dem ersten Aufnahmeelement geschwenkt wird.

Das Zwischenelement und das Drehelement können einen Kniehebelmechanismus ausbilden, dessen Totpunkt beim Übergang zwischen dem geöffneten Zustand und dem geschlossenen Zustand überschritten wird.

Dadurch kann gewährleistet werden, dass der Multifunktionsverbinder nicht unbeabsichtigt, beispielsweise durch Erschütterungen, geöffnet wird. Das Zwischenelement und das Drehelement müssen nicht notwendigerweise einen Kniehebelmechanismus ausbilden. Ein unbeabsichtigtes Öffnen des Multifunktionsverbinders kann beispielsweise auch durch eine Verriegelung gewährleistet werden.

Der Parallelogrammmechanismus kann einen ersten Teilmechanismus und einen zweiten Teilmechanismus aufweisen, die in einer Richtung senkrecht zu der ersten Ebene und der zweiten Ebene um einen dritten Abstand zueinander versetzt sind. Der dritte Abstand kann beispielsweise mindestens 10 cm oder mindestens 20 cm oder mindestens 30 cm betragen. Jeder von dem ersten Teilmechanismus und dem zweiten Teilmechanismus kann ein erstes Seitenelement und ein zweites Seitenelement aufweisen.

Jeder von dem ersten Teilmechanismus und dem zweiten Teilmechanismus kann ein Zwischenelement und ein Drehelement aufweisen. Jeder von dem ersten Teilmechanismus und dem zweiten Teilmechanismus kann eine Halterung aufweisen. Der erste Teilmechanismus und der zweite Teilmechanismus können gemeinsam eine Halterung aufweisen.

Das Drehelement des ersten Teilmechanismus und das Drehelement des zweiten Teilmechanismus können über eine Welle, die sich entlang der ersten Achse erstreckt, miteinander verbunden sein, so dass sie integral miteinander um die erste Achse drehbar sind.

Der Parallelogrammmechanismus kann eine Aufnahme für eine Kraftaufbringungsvorrichtung aufweisen, und das Drehelement kann mittels der Kraftaufbringungsvorrichtung um die erste Achse gedreht werden. Die Kraftaufbringungsvorrichtung kann ein Hebel oder eine andere mechanische Verstellvorrichtung sein oder kann eine elektrische, pneumatische oder hydraulische Verstellvorrichtung sein.

Das erste Aufnahmeelement kann zur Aufnahme mindestens zweier erster Verbindungselemente ausgebildet sein. Entsprechend kann ein zweites Aufnahmeelement verwendet werden, das zur Aufnahme mindestens zweier zweiter Verbindungselemente ausgebildet ist, wobei die Verbindungsrichtungen der ersten Verbindungselemente und der zweiten Verbindungselemente parallel zueinander ausgerichtet sind. Insbesondere sind die ersten Verbindungselemente koaxial zu den jeweils gegenüberliegenden komplementären zweiten Verbindungselementen ausgerichtet, so dass die ersten und die zweiten Verbindungselemente beim Annähern des zweiten Aufnahmeelements an das erste Aufnahmeelement miteinander verbunden werden. Beispielsweise werden zueinander komplementäre Stecker ineinander gesteckt.

Bei einer derartigen Ausgestaltung können mehrere Verbindungselemente einfach und schnell parallel bzw. simultan miteinander verbunden bzw. voneinander getrennt werden. Die Anzahl der zweiten Verbindungselemente kann der Anzahl der ersten Verbindungselemente entsprechen oder kann geringer als die Anzahl der ersten Verbindungselemente sein.

Das erste Aufnahmeelement kann eine erste Platte aufweisen, in der mindestens eine erste Öffnung zur Aufnahme des mindestens einen ersten Verbindungselements ausgebildet ist. Das zweite Aufnahmeelement kann eine zweite Platte aufweisen, in der mindestens eine zweite Öffnung zur Aufnahme des mindestens einen zweiten Verbindungselements ausgebildet ist.

Die erste Platte und die zweite Platte können in dem geschlossenen Zustand des Multifunktionsverbinders aneinandergepresst werden. Alternativ kann in dem geschlossenen Zustand ein erster Abstand zwischen der ersten Platte und der zweiten Platte vorliegen, der mindestens 1 mm beträgt.

Eines bzw. eine von dem ersten Aufnahmeelement und der Halterung kann eine parallel zu der Verbindungsrichtung des ersten Verbindungselements und des zweiten Verbindungselements ausgerichtete rohrförmige Hülse aufweisen, und das bzw. die andere von dem ersten Aufnahmeelement und der Halterung kann einen parallel zu der Verbindungsrichtung des ersten Verbindungselements und des zweiten Verbindungselements ausgerichteten Bolzen aufweisen, der durch die Hülse verläuft. Insbesondere kann die Hülse an dem ersten Aufnahmeelement angebracht sein und der Bolzen kann an der Halterung angebracht sein. Anhand des durch die Hülse verlaufenden Bolzens ist eine zusätzliche Führung der Bewegung des Parallelogrammmechanismus und somit eine Stabilisierung der Ausrichtung zwischen dem ersten Aufnahmeelement und der Halterung bzw. dem zweiten Aufnahmeelement möglich.

Das erste Seitenelement kann zwei parallel zueinander angeordnete längliche Flacheisen aufweisen, und das erste Aufnahmeelement kann ein längliches, in der Verbindungsrichtung des ersten Verbindungselements und des zweiten Verbindungselements ausgerichtetes Flacheisen aufweisen, das durch einen Zwischenraum zwischen den zwei parallel zueinander angeordneten länglichen Flacheisen des ersten Seitenelements verläuft. Durch das Flacheisen des ersten Aufnahmeelements kann die Bewegung des Parallelogrammmechanismus geführt werden und die seitliche Ausrichtung zwischen dem ersten Aufnahmeelement und der Halterung bzw. dem zweiten Aufnahmeelement kann stabilisiert werden. Auch das zweite Seitenelement kann zwei parallel zueinander angeordnete längliche Flacheisen aufweisen, und das Flacheisen des ersten Aufnahmeelements kann durch einen Zwischenraum zwischen den zwei parallel zueinander angeordneten länglichen Flacheisen des zweiten Seitenelements verlaufen.

Der Parallelogrammmechanismus kann direkt oder indirekt an dem ersten Aufnahmeelement angelenkt sein.

Das zweite Aufnahmeelement kann lösbar an der Halterung anbringbar sein. Aufgrund der lösbaren Anbringung kann das zweite Aufnahmeelement beispielsweise beim Trennen eines Anhängers von einem Zugfahrzeug von der Halterung und damit von dem Parallelogrammmechanismus und dem ersten Aufnahmeelement getrennt werden.

Das zweite Aufnahmeelement kann einen Griffabschnitt aufweisen. Der Griffabschnitt erleichtert die Trennung des zweiten Aufnahmeelements von der Halterung, da der Griffabschnitt von einem Benutzer einfach ergriffen werden kann.

Die Halterung kann zwei Bolzen aufweisen. Das zweite Aufnahmeelement kann zwei Ausnehmungen aufweisen und auf die Halterung aufsteckbar sein, indem die zwei Ausnehmungen auf die zwei Bolzen gesetzt werden.

Weitere Aspekte betreffen eine Baueinheit mit einem ersten Aufnahmeelement und einem Parallelogrammmechanismus zur Anbringung an einen Zugfahrzeug, sowie einen zweites Aufnahmeelement zur Aufnahme von Verbindungselementen von Leitungen eines Fahrzeuganhängers. Unter den Begriff "Fahrzeuganhänger" fallen dabei beispielsweise auch landwirtschaftliche Geräte, wie eine Vorrichtung zur Ausbringung von Pflanzenschutzmittel, ein Frontlader oder ein Räumschild.

Nach einem weiteren Aspekt weist ein Zugfahrzeug einen Multifunktionsverbinder auf, wobei das erste Aufnahmeelement und der Parallelogrammmechanismus an dem Zugfahrzeug angebracht sind. Das erste Aufnahmeelement nimmt erste Verbindungselemente zugfahrzeugseitiger Leitungen auf.

Zweite Verbindungselemente anhängerseitiger Leitungen können von dem zweiten Aufnahmeelement aufgenommen werden. Dementsprechend müssen das erste Aufnahmeelement und der Parallelogrammmechanismus nur einmal, nämlich an dem Zugfahrzeug, vorgesehen sein, während das zweite Aufnahmeelement, das vergleichsweise einfach, beispielsweise aus einer Platte, ausgebildet sein kann, an jedem Anhänger bzw. jeder sonstigen Anhängevorrichtung, der bzw. die an dem Zugfahrzeug angehängt werden kann, vorgesehen sein kann. Dadurch können Kosten gespart werden.

Mit dem vorliegenden Multifunktionsverbinder können standardisierte Stecker verwendet werden. Es ist nicht erforderlich spezielle Stecker, insbesondere aufeinander zu pressende Dichtungen, zu verwenden. Dadurch können Kosten und Ersatzteilaufwendungen reduziert werden. Es können einzelne Stecker einzelner Leitungen separat mit den entsprechenden Steckern (Verbindungselementen) an einem Aufnahmeelement verbunden werden. D.h., es kann beispielsweise das erste Aufnahmeelement an einem Zugfahrzeug vorgesehen sein, und einzelne Stecker von Leitungen an einem Fahrzeuganhänger können mit den entsprechenden Steckern (ersten Verbindungelementen) an dem ersten Aufnahmeelement verbunden werden, ohne dass die Stecker der Leitungen an dem Fahrzeuganhänger an einem zweiten Aufnahmeelement angebracht sein müssen. Das erste Aufnahmeelement ist mit einzelnen zweiten Verbindungselementen kompatibel. Somit ist das zweite Aufnahmeelement optional und das erste Aufnahmeelement kann ohne ein zweites Aufnahmeelement verwendet werden.

### Kurze Beschreibung der Zeichnungen

Weitere Merkmale und Aspekte dieser Offenbarung werden durch die folgende Beschreibung und die beiliegenden Zeichnungen offensichtlich, von denen:
Fig. 1 eine perspektivische Ansicht eines Multifunktionsverbinders gemäß einer ersten Ausführungsform in einem geöffneten Zustand von einer erhöhten Position links hinten betrachtet zeigt,
Fig. 2 eine Seitenansicht des Multifunktionsverbinders gemäß der ersten Ausführungsform in dem geöffneten Zustand von rechts betrachtet zeigt,
Fig. 3 eine Seitenansicht des Multifunktionsverbinders gemäß der ersten Ausführungsform in einem geschlossenen Zustand von rechts betrachtet zeigt,
Fig. 4 eine Draufsicht eines zweiten Aufnahmeelements von hinten betrachtet zeigt,
Fig. 5 eine perspektivische Ansicht eines Multifunktionsverbinders gemäß einer zweiten Ausführungsform in einem geöffneten Zustand von einer erhöhten Position links hinten betrachtet zeigt,
Fig. 6 eine perspektivische Ansicht des Multifunktionsverbinders gemäß der zweiten Ausführungsform in einem geschlossenen Zustand von einer erhöhten Position links hinten betrachtet zeigt, und
Fig. 7 eine perspektivische Ansicht eines Multifunktionsverbinders gemäß einer dritten Ausführungsform in einem geöffneten Zustand von einer erhöhten Position rechts hinten betrachtet zeigt.

### Ausführliche Beschreibung von Ausführungsbeispielen

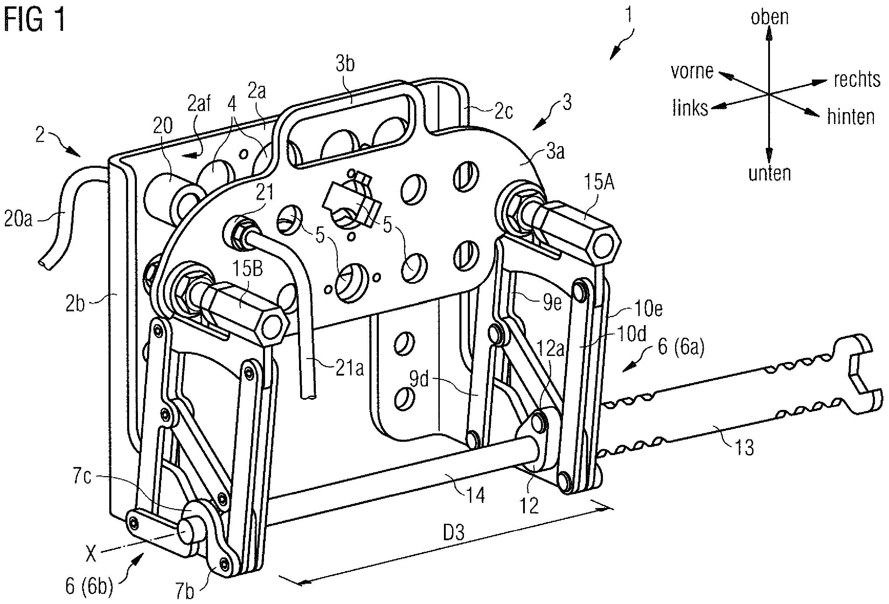

In der Beschreibung dieser Erfindung beziehen sich Richtungsangaben auf die in Fig. 1 gezeigten Richtungen, die mit den Richtungsangaben eines Fahrzeugs oder eines Fahrzeuganhängers übereinstimmen können, an dem der Multifunktionsverbinder angebracht ist. Beispielsweise kann die in Fig. 1 als "vorne" bezeichnete Richtung in eine Fahrtrichtung des Fahrzeugs oder Fahrzeuganhängers weisen, und die als "hinten" bezeichnete Richtung kann entgegen der Fahrrichtung weisen. Die in Fig. 1 gezeigten Richtungen müssen jedoch nicht mit den Richtungsangaben des Fahrzeugs oder des Fahrzeuganhängers übereinstimmen. Beispielsweise kann die als "vorne" bezeichnete Richtung entgegen der Fahrtrichtung weisen und die als "hinten" bezeichnete Richtung kann in die Fahrtrichtung nach vorne weisen. Die als "vorne" bezeichnete Richtung kann auch nach rechts oder links weisen, und die als "hinten" bezeichnete Richtung kann entsprechend nach links oder rechts weisen. Auch eine schräge oder geneigte Anordnung ist möglich.

Im Folgenden wird eine erste Ausführungsform der vorliegenden Offenbarung mit Bezug auf die Figuren 1 bis 4 beschrieben.

Fig. 1 zeigt einen Multifunktionsverbinder 1 in einer perspektivischen Ansicht von einer erhöhten Position links hinten. Der in Fig. 1 gezeigte Zustand des Multifunktionsverbinders 1 entspricht einem geöffneten Zustand. Der Multifunktionsverbinder 1 weist ein erstes Aufnahmeelement 2 und ein zweites Aufnahmeelement 3 auf.

Das erste Aufnahmeelement 2 weist eine erste Platte 2a mit mehreren ersten Löchern 4 sowie eine linke Seitenwand 2b und eine rechte Seitenwand 2c auf. In den ersten Löchern 4 können erste Verbindungselemente 20, wie beispielsweise Stecker/Verbinder/Kupplungen von elektrischen Leitungen und/oder von Hydraulik- und/oder Pneumatikschläuchen 20a, angebracht werden. Die ersten Verbindungselemente 20 können, beispielsweise durch Verschweißen oder durch formschlüssige Verbindung, wie Verschrauben oder durch Sicherungsringe, an der ersten Platte 2a befestigt werden.

Das zweite Aufnahmeelement 3 weist eine zweite Platte 3a mit mehreren zweiten Löchern 5 auf. In den zweiten Löchern 5 können zu den ersten Verbindungselementen 20 komplementäre zweite Verbindungselemente 21, wie beispielsweise Stecker/Verbinder/Kupplungen von elektrischer Leitungen und/oder von Hydraulik- und/oder Pneumatikschläuchen 21a angebracht werden. Die zweiten Verbindungselemente 21 können, beispielsweise durch Verschweißen oder durch formschlüssige Verbindung, wie Verschrauben oder durch Sicherungsringe, an der zweiten Platte 3a befestigt werden.

Obwohl in Fig. 1 nur ein einzelnes erstes Verbindungselement 20 und nur ein einzelnes zweites Verbindungselement 21 gezeigt sind, können in mehreren, insbesondere in jedem, der ersten Löcher 4 und der zweiten Löcher 5 erste bzw. zweite Verbindungselemente 20, 21 angeordnet sein, die jeweiligen Leitungen 20a, 21a zugeordnet sind. Beispielsweise können an dem ersten Aufnahmeelement 2 eins, zwei, drei, vier, fünf, sechs, sieben, acht oder mehr erste Verbindungselemente 20 angebracht sein. An dem zweiten Aufnahmeelement 3 kann eine entsprechende oder eine geringere oder eine höhere Anzahl zweiter Verbindungselemente 21 angebracht sein.

Die Verbindungselemente 20, 21 können beispielsweise Stecker bzw. Verbinder/Kupplungen von elektrischen Leitungen bzw. Stromleitungen/- kabeln, von Hydraulikleitungen/-schläuchen, von Pneumatikleitungen/- schläuchen, von Wasserleitungen/-schläuchen, von Düngemittelleitungen/- schläuchen, oder von sonstigen Leitungen/Schläuchen sein. Die Verbindungselemente 20, 21 können spezielle oder standardisierte Verbindungelemente, wie beispielsweise SVK- oder UDK-Muffen, sein, wie sie beispielsweise im Hauptkatalog 2018/2019 der Fliegl Agro-Center GmbH, Kastl, aufgeführt sind. Die Verbindungselemente 20, 21 können aufeinanderpressbare Dichtungen oder standardisierte Stecker sein. Es können Standard-Schlauchkupplungen bzw. Standard-Schnellkupplungen verwendet werden. Die Verbindungselemente können beispielsweise unter Druck trennbar und/oder verbindbar sein.

Die Verbindungselemente 20, 21 können eine Toleranz bei einer zur Verbindung bzw. Trennung erforderlichen koaxialen Ausrichtung der Verbindungselemente 20, 21 aufweisen. D.h., das erste Verbindungselement 20 und das zweite Verbindungselement 21 können in einem Zustand, in dem die jeweiligen Achsen maximal um einen Winkel, der der Toleranz entspricht, zueinander verkippt sind, miteinander verbunden oder voneinander getrennt werden. Die Toleranz kann beispielsweise 1° oder 2° oder 3° oder 5° betragen.

Die erste Platte 2a und die zweite Platte 3a sind parallel zueinander angeordnet und liegen einander mit einem ersten Abstand D1 gegenüber. In dem in Fig. 1 gezeigten geöffneten Zustand des Multifunktionsverbinders 1 entspricht der erste Abstand D1 einem ersten Wert, der beispielsweise in einem Bereich von 1 cm bis 30 cm liegt. Der erste Abstand D1 kann beispielsweise 5,4 cm betragen.

Jedes der zweiten Löcher 5 ist koaxial zu einem gegenüberliegenden der ersten Löcher 4 ausgerichtet. Die ersten Verbindungselemente 20 und die zweiten Verbindungselemente 21 sind in den gegenüberliegenden ersten Löchern 4 und zweiten Löchern 5 derart ausgerichtet, dass ihre Verbindungsrichtung senkrecht zu der ersten Platte 2a und der zweiten Platte 3a ist. D.h., die ersten Verbindungselemente 20 und die zweiten Verbindungselemente 21 können durch Verringern des ersten Abstands D1 zwischen der ersten Platte 2a und der zweiten Platte 3a ohne Verkippen oder Verdrehen der ersten Platte 2a und der zweiten Platte 3a miteinander verbunden werden. In der Darstellung in den Figuren entspricht die Verbindungsrichtung der Vorne-Hinten-Richtung, d.h. einer horizontalen Richtung bzw. einer Richtung senkrecht zu der ersten Platte 2a und der zweiten Platte 3a.

Die erste Platte 2a weist auf der der zweiten Platte 3a zugewandten Seite eine erste ebene Fläche 2af auf. Die zweite Platte 3a weist auf der der ersten Platte 2a zugewandten Seite eine zweite ebene Fläche 3af auf. Die Verbindungsrichtung entspricht einer Richtung senkrecht zu der ersten ebenen Fläche 2af bzw. einer Richtung senkrecht zu der zweiten ebenen Fläche 3af.

Das erste Aufnahmeelement 2 und das zweite Aufnahmeelement 3 sind über einen Parallelogrammmechanismus 6 lösbar miteinander verbunden. In der vorliegenden Ausführungsform ist der Parallelogrammmechanismus 6 fest mit dem ersten Aufnahmeelement 2 verbunden und das zweite Aufnahmeelement 3 ist lösbar an dem Parallelogrammmechanismus 6 angebracht. Der Parallelogrammmechanismus 6 weist einen rechten (ersten) Teilmechanismus 6a und einen linken (zweiten) Teilmechanismus 6b auf.

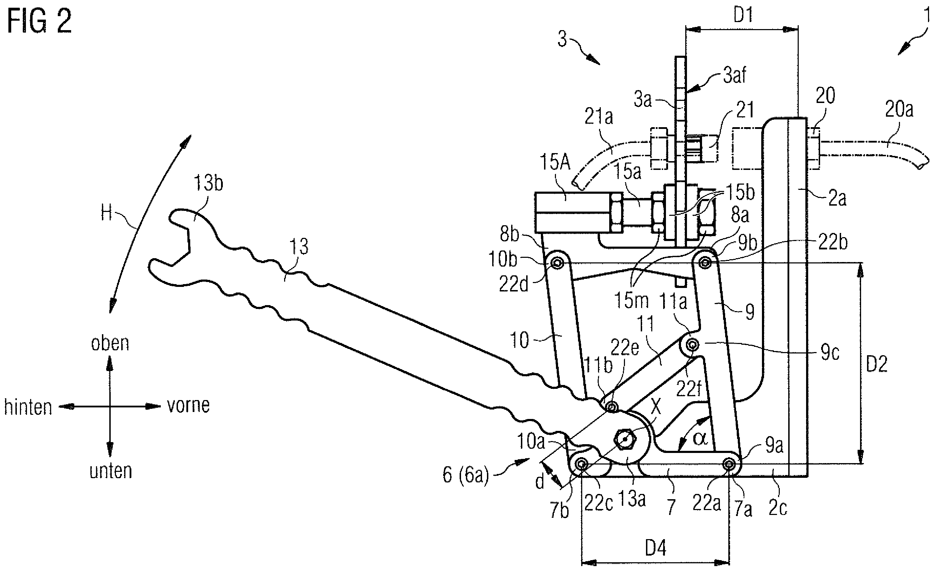

Fig. 2 zeigt eine Seitenansicht des Multifunktionsverbinders 1 in dem geöffneten Zustand von rechts. Wie in Fig. 2 gezeigt ist, weist der rechte Teilmechanismus 6a eine Halterung 15A zur Anbringung des zweiten Seitenelements 3, ein längliches erstes Seitenelement 9 und ein längliches zweites Seitenelement 10 auf. Das erste Seitenelement 9 besteht in der vorliegenden Ausführungsform aus zwei parallel zueinander angeordneten länglichen Flacheisen 9d und 9e, wie in Fig. 1 gezeigt ist. Das erste Seitenelement 9 kann alternativ aus einem einzelnen oder aus mehreren Flacheisen oder ähnlichen Bauteilen, wie beispielsweise Stangen, bestehen. Das zweite Seitenelement 10 besteht in der vorliegenden Ausführungsform aus zwei parallel zueinander angeordneten länglichen Flacheisen 10d und 10e, wie in Fig. 1 gezeigt ist. Das zweite Seitenelement 10 kann alternativ aus einem einzelnen oder aus mehreren Flacheisen oder ähnlichen Bauteilen, wie beispielsweise Stangen, bestehen. Das erste Seitenelement 9 und das zweite Seitenelement 10 können dieselbe Länge aufweisen.

Das erste Seitenelement 9 und das zweite Seitenelement 10 sind im Wesentlichen in einer Ebene (der Zeichenebene in Fig. 2) angeordnet, die parallel zu der Verbindungsrichtung der ersten und zweiten Verbindungselemente 20, 21 (d.h. der Vorne-Hinten-richtung) ist. Mit anderen Worten, das erste Seitenelement 9 und das zweite Seitenelement 10 liegen im Wesentlichen in einer Ebene, die durch die Vorne-Hinten-Richtung und die Oben-Unten-Richtung definiert ist. Im Wesentlichen in einer Ebene bedeutet dabei, dass die Flacheisen 9d und 10d geringfügig weiter links angeordnet sind als die Flacheisen 9e und 10e. Alternativ können das erste Seitenelement 9 und das zweite Seitenelement 10 in zwei zueinander parallelen Ebenen ausgebildet sein, die parallel zu der Verbindungsrichtung der ersten und zweiten Verbindungselemente 20, 21 sind.

Das erste Seitenelement 9 ist parallel zu dem zweiten Seitenelement 10 angeordnet. Mit anderen Worten, eine Längserstreckungsrichtung der Flacheisen 9d und 9e ist parallel zu einer Längserstreckungsrichtung der Flacheisen 10d und 10e. Das zweite Seitenelement 10 ist um einen vierten Abstand D4 in der Verbindungsrichtung der Verbindungselemente 20, 21 zu dem ersten Seitenelement 9 versetzt. Der vierte Abstand D4 beträgt beispielsweise mindestens 1 cm, mindestens 5 cm, mindestens 10 cm, mindestens 20 cm oder mindestens 30 cm. Der vierte Abstand D4 beträgt beispielsweise 12 cm.

Ein erstes (unteres) Ende 9a des ersten Seitenelements 9 ist über einen Stift an einem ersten Verbindungspunkt 22a gelenkig mit dem vorderen Abschnitt eines unteren sich nach hinten erstreckenden Teils der rechten Seitenwand 2c des ersten Aufnahmeelements 2 und mit einem ersten (vorderen) Ende 7a eines dritten Seitenelements 7 verbunden. Ein zweites (oberes) Ende 9b des ersten Seitenelements 9 ist über einen Stift an einem zweiten Verbindungspunkt 22b gelenkig mit einem vorderen Abschnitt 8a der Halterung 15A verbunden.

Ein erstes (unteres) Ende 10a des zweiten Seitenelements 10 ist über einen Stift an einem dritten Verbindungspunkt 22c gelenkig mit einem hinteren Abschnitt des unteren sich nach hinten erstreckenden Teils der rechten Seitenwand 2c des ersten Aufnahmeelements 2 und mit einem zweiten (hinteren) Ende 7b des dritten Seitenelements 7 verbunden. Ein zweites (oberes) Ende 10b des zweiten Seitenelements 10 ist über einen Stift an einem vierten Verbindungspunkt 22d gelenkig mit einem hinteren Abschnitt 8b der Halterung 15A verbunden.

Durch die gelenkige Verbindung mittels der Stifte sind das erste Seitenelement 9 und das zweite Seitenelement 10 in der Zeichenebene von Fig. 2, d.h. um jeweilige Achsen senkrecht zu der Zeichenebene bzw. der Ebene, in der das ersten Seitenelement 9 und das zweite Seitenelement 10 angeordnet sind, relativ zu dem ersten Aufnahmeelement 2 und der Halterung 15A bzw. dem an der Halterung 15A angebrachten zweiten Aufnahmeelement 3 schwenkbar. Anstelle der Stifte können Schrauben an den Verbindungspunkten 22a, 22b, 22c, 22d vorgesehen sein.

Die Verbindungspunkte 22a, 22b, 22c, 22d der Seitenelemente 9, 10 mit dem ersten Aufnahmeelement 2 bzw. der Halterung 15A bilden in der Darstellung in Fig. 2 die Eckpunkte eines Parallelogramms. Eine Linie zwischen dem ersten Verbindungspunkt 22a und dem zweiten Verbindungspunkt 22b bildet eine erste Seite des Parallelogramms. Eine Linie zwischen dem dritten Verbindungspunkt 22c und dem vierten Verbindungspunkt 22d bildet eine zu der ersten Seite parallele zweite Seite des Parallelogramms. Eine Linie zwischen dem ersten Verbindungspunkt 22a und dem dritten Verbindungspunkt 22c bildet eine dritte Seite des Parallelogramms. Eine Linie zwischen dem zweiten Verbindungspunkt 22b und dem vierten Verbindungspunkt 22d bildet eine zu der dritten Seite parallele vierte Seite des Parallelogramms. Die erste Seite und die zweite Seite des Parallelogramms weisen eine identische Länge auf, d.h., der Abstand zwischen dem ersten Verbindungspunkt 22a und dem zweiten Verbindungspunkt 22b und der Abstand zwischen dem dritten Verbindungspunkt 22c und dem vierten Verbindungspunkt 22d sind identisch. Die dritte Seite und die vierte Seite des Parallelogramms weisen eine identische Länge auf, d.h., der Abstand zwischen dem ersten Verbindungspunkt 22a und dem dritten Verbindungspunkt 22c und der Abstand zwischen dem zweiten Verbindungspunkt 22b und dem vierten Verbindungspunkt 22d sind identisch.

Zwischen der ersten Seite und der dritten Seite des Parallelogramms sowie zwischen der zweiten Seite und der vierten Seite des Parallelogramms ist ein Winkel α ausgebildet. Ein Winkel zwischen der ersten Seite und der vierten Seite des Parallelogramms sowie ein Winkel zwischen der zweiten Seite und der dritten Seite des Parallelogramms entspricht 180°-α.

Der rechte Teilmechanismus 6a weist ein längliches Zwischenelement 11, das in der vorliegenden Ausführungsform als Flacheisen ausgebildet ist, und ein Drehelement 12 auf. Als das Zwischenelement 11 kann alternativ beispielsweise eine Stange verwendet werden. Das Drehelement 12 ist über das dritte Seitenelement 7 mit dem ersten Aufnahmeelement 2 um eine erste Achse X, die senkrecht zu der Ebene des Parallelogramms, d.h. der Zeichenebene in Fig. 2, angeordnet ist, drehbar verbunden. Ein erstes Ende 11a des Zwischenelements 11 in einer Längserstreckungsrichtung des Zwischenelements 11 ist an einem fünften Verbindungspunkt 22f über einen Stift gelenkig mit einem mittleren Abschnitt 9c des ersten Seitenelements 9 verbunden. Der mittlere Abschnitt 9c liegt zwischen dem ersten Ende 9a und dem zweiten Ende 9b in der Längserstreckungsrichtung des ersten Seitenelements 9. Ein zweites Ende 11b des Zwischenelements 11 ist an einem sechsten Verbindungspunkt 22e über einen Stift mit einem exzentrischen Abschnitt 12a des Drehelements 12 gelenkig verbunden. Der exzentrische Abschnitt 12a ist um einen fünften Abstand d von der ersten Achse X beabstandet. Das Drehelement 12 und das Zwischenelement 11 bilden einen Kniehebelmechanismus.

Aufgrund der gelenkigen Verbindung der Seitenelemente 9, 10 mit dem ersten Aufnahmeelement 2 und der Halterung 15A kann das Parallelogramm geschert werden, d.h., der Winkel α kann verändert werden. Der Winkel α ist innerhalb eines ersten Bereichs variabel. Die Scherung des Parallelogramms wird durch das Zwischenelement 11 und das Drehelement 12 auf den ersten Bereich eingeschränkt. Der erste Bereich ist beispielsweise ein Bereich von 60° bis 120° oder von 70° bis 110° oder von 80° bis 100°.

In der Darstellung in Fig. 2, die einem geöffneten Zustand des Multifunktionsverbinders 1 entspricht, ist der Winkel α kleiner als 90°. Beispielsweise ist der Winkel α kleiner als 85° oder kleiner als 80°. Durch eine Drehung des Drehelements 12 im Uhrzeigersinn in der Darstellung in Fig. 2 wird der in Fig. 2 links oberhalb der ersten Achse X angeordnete exzentrische Abschnitt 12a, d.h. der sechste Verbindungspunkt 22e, im Uhrzeigersinn um die erste Achse X bewegt. Dadurch wird das an dem zweiten Ende 11b mit dem exzentrischen Abschnitt 12a verbundene Zwischenelement 11 nach vorne (rechts in Fig. 2) in Richtung auf das erste Seitenelement 9 und die erste Platte 2a gedrückt, und das an dem mittleren Abschnitt 9c mit dem ersten Ende 11a des Zwischenelements 11 verbundene erste Seitenelement 9 wird in Richtung auf die erste Platte 2a gedrückt. Da das erste Ende 9a des ersten Seitenelements 9 gelenkig mit der rechten Seitenwand 2c des ersten Aufnahmeelements 2 verbunden ist, wird das erste Seitenelement 9 durch die von dem Zwischenelement 11 ausgeübte Kraft im Uhrzeigersinn um das erste Ende 9a geschwenkt, so dass der Winkel α vergrößert wird. Dabei wird das Parallelogramm geschert, d.h., auch das zweite Seitenelement 10 wird im Uhrzeigersinn um das erste Ende 10a bzw. den dritten Verbindungspunkt 22c geschwenkt. Durch die Scherung des Parallelogramms wird die Halterung 15A mit dem daran angebrachten zweiten Aufnahmeelement 3 nebst der zweiten Platte 3a nach vorne (rechts in Fig. 2) in Richtung auf die erste Platte 2a versetzt, wobei das zweite Aufnahmeelement 3 seine Ausrichtung zu dem ersten Aufnahmeelement 2 beibehält. D.h., die dritte und die vierte Seite des Parallelogramms bleiben bei der Scherung parallel zueinander.

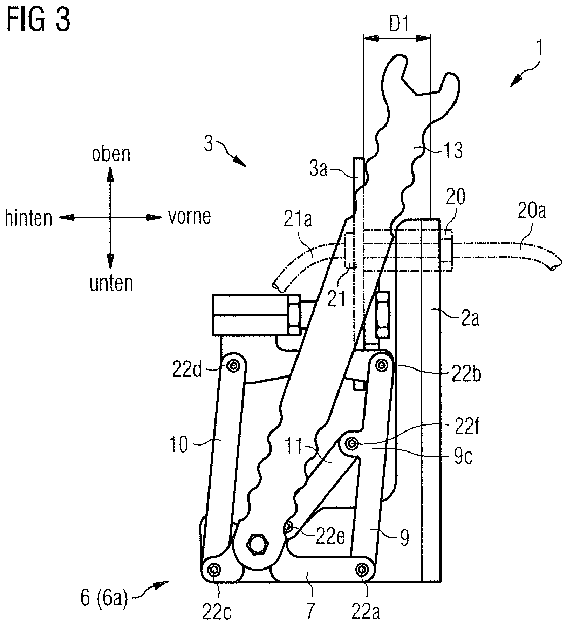

Bei der Scherung wird der erste Abstand D1 zwischen der ersten Platte 2a und der zweiten Platte 3a bzw. zwischen der ersten ebenen Fläche 2af und der zweiten ebenen Fläche 3af von dem ersten Wert in dem geöffneten Zustand verringert. Mit anderen Worten, durch die Scherung wird der Multifunktionsverbinder 1 in einen in Fig. 3 dargestellten geschlossenen Zustand versetzt. In dem geschlossenen Zustand entspricht der erste Abstand D1 einem zweiten Wert, der beispielsweise in einem Bereich von 0 cm bis 10 cm oder von 1 mm bis 10 cm oder von 1 cm bis 10 cm liegt, und der Winkel α beträgt beispielsweise mindestens 100° bzw. 110°. Vorzugsweise beträgt der erste Abstand D1 in dem geschlossenen Zustand 5,4 cm. Die Differenz zwischen dem ersten Wert in dem geöffneten Zustand des Multifunktionsverbinders 1 und dem zweiten Wert in dem geschlossenen Zustand des Multifunktionsverbinders 1 kann beispielsweise mindestens 3 cm oder mindestens 5 cm betragen. Bei der vorliegenden Ausführungsform ist es nicht notwendig, dass die erste ebene Fläche 2af und die zweite ebene Fläche 3af in dem geschlossenen Zustand aufeinanderliegen. In dem geschlossenen Zustand kann ein Abstand von mindestens 1 mm oder mindestens 1 cm zwischen der ersten ebenen Fläche 2af und der zweiten ebenen Flächen 3af vorliegen. Alternativ können die erste ebene Fläche 2af und die zweite ebene Fläche 3af in dem geschlossenen Zustand aufeinanderliegen bzw. aneinander gepresst werden, d.h., der zweite Wert kann 0 cm betragen.

Da der Winkel α in dem ersten Bereich um 90° herum liegt, wird ein zweiter Abstand D2 zwischen der dritten Seite und der vierten Seite des Parallelogramms bei der Scherung im Wesentlichen nicht bzw. nur geringfügig verändert. D.h., das zweite Aufnahmeelement 3 bewegt sich im Wesentlichen horizontal entlang einer Richtung senkrecht zu der ersten ebenen Fläche 2af und der zweiten ebenen Fläche 3af, d.h. entlang der Verbindungsrichtung der ersten Verbindungselemente 20 und der zweiten Verbindungselemente 21, auf das erste Aufnahmeelement 2 zu und bewegt sich dabei im Wesentlichen nicht bzw. nur geringfügig in der vertikalen Richtung. Der zweite Abstand D2 beträgt beispielsweise mindestens 10 cm oder mindestens 20 cm und höchstens 50 cm. Vorzugsweise beträgt der zweite Abstand D2 16,5 cm. Die Änderung des zweiten Abstands D2 bei der Scherung beträgt beispielsweise maximal 2 cm oder maximal 5 mm oder maximal 2 mm, vorzugsweise 1,5 mm.

Das zweite Aufnahmeelement 3 behält bei der Scherung seine Ausrichtung zu dem ersten Aufnahmeelement 2 im Wesentlichen bei, d.h., die erste ebene Fläche 2af und die zweite ebene Fläche 3af werden relativ zueinander weder gekippt noch verdreht. Aufgrund der Anbringung des zweiten Aufhahmeelements 3 an der Halterung 15A ist ein geringfügiges Verkippen des zweiten Aufnahmeelements 3 möglich. Die Verbindungsrichtungen der ersten Verbindungselemente 20 und der zweiten Verbindungselemente 21 bleiben im Wesentlichen parallel zueinander. Die ersten Verbindungselemente 20 und die zweiten Verbindungselemente 21 bleiben weitgehend koaxial einander gegenüberliegend ausgerichtet.

Wie in Fig. 1 gezeigt ist, weist der linke Teilmechanismus 6b analog zu dem rechten Teilmechanismus 6a ebenfalls die oben beschriebene Ausgestaltung mit einer Halterung 15B, einem ersten Seitenelement 9, einem zweiten Seitenelement 10, einem dritten Seitenelement 7, einem Zwischenelement 11 und einem Drehelement 12 auf.

Das Drehelement 12 des rechten Teilmechanismus 6a und das Drehelement 12 des linken Teilmechanismus 6b sind über eine Welle 14 miteinander verbunden. Die Welle 14 erstreckt sich entlang der ersten Achse X und überträgt Drehmoment zwischen dem Drehelement 12 des rechten Teilmechanismus 6a und dem Drehelement 12 des linken Teilmechanismus 6b, so dass die beiden Drehelemente 12 integral miteinander gedreht werden und das Parallelogramm des rechten Teilmechanismus 6a und das Parallelogramm des linken Teilmechanismus 6b synchron zueinander geschert werden. D.h., der Winkel α zwischen der ersten Seite und der dritten Seite des Parallelogramms ist bei dem rechten Teilmechanismus 6a und bei dem linken Teilmechanismus 6b zu jedem Zeitpunkt identisch. Die Welle 14 kann weggelassen werden.

Das Drehelement 12 des rechten Teilmechanismus 6a und das Drehelement 12 des linken Teilmechanismus 6b sind über die Welle 14 an dem dritten Seitenelement 7 des rechten Teilmechanismus 6a und dem dritten Seitenelement 7 des linken Teilmechanismus 6b gelagert. Wie in Fig. 1 gezeigt ist, weist das dritte Seitenelement 7 in einem hinteren Bereich vor dem zweiten Ende 7b eine Schlaufenausgestaltung 7c auf, durch die die Welle 14 geführt ist. Die Welle 14 wird durch die Schlaufenausgestaltung 7c zusammen mit einem unteren, sich nach hinten erstreckenden Abschnitt der entsprechenden Seitenwand 2b, 2c des ersten Aufnahmeelements 2 gelagert.

Ein dritter Abstand D3 zwischen dem rechten Teilmechanismus 6a und dem linken Teilmechanismus 6b beträgt beispielsweise mindestens 5 cm oder mindestens 10 cm oder mindestens 20 cm und höchstens 60 cm, vorzugsweise 31 cm. Die Länge der Welle 14 entspricht im Wesentlichen dem dritten Abstand D3 bzw. ist um ein paar Zentimeter größer als der dritte Abstand D3.

Wie in Fig. 1 bis 3 gezeigt ist, weist der Parallelogrammmechanismus 6 einen Hebel 13 auf. Ein erstes Ende 13a des Hebels 13 ist an einem rechten Ende der Welle 14 angebracht. Die Welle 14 überträgt ein von dem Hebel 13 ausgeübtes Drehmoment auf das Drehelement 12 des rechten Teilmechanismus 6a und auf das Drehelement 12 des linken Teilmechanismus 6b. Die oben beschriebene Drehung des Drehelements 12 von dem in Fig. 2 dargestellten geöffneten Zustand des Multifunktionsverbinders 1 im Uhrzeigersinn zu dem in Fig. 3 dargestellten geschlossenen Zustand des Multifunktionsverbinders 1 kann durch ein Schwenken eines zweiten Endes 13b des Hebels 13 im Uhrzeigersinn entlang einer Richtung H vorgenommen werden. Durch Schwenken des zweiten Endes 13b des Hebels 13 entgegen dem Uhrzeigersinn und die damit verbundene Drehung der Welle 14 und des Drehelements 12 entgegen dem Uhrzeigersinn kann der Multifunktionsverbinder 1 von dem in Fig. 3 dargestellten geschlossenen Zustand in den in Fig. 2 dargestellten geöffneten Zustand zurückgebracht werden. D.h., eine Drehung des Drehelements 12 mittels des Hebels 13 bewirkt die oben beschriebene Scherung des Parallelogramms.

Der Hebel 13 ist lösbar bzw. abnehmbar an einem Anbringungsabschnitt der Welle 14 angebracht. Insbesondere kann der Hebel 13 in verschiedenen Positionen an dem Anbringungsabschnitt der Welle 14 angebracht werden. Alternativ kann der Hebel 13 fest an der Welle 14 montiert sein. Als der Hebel 13 kann beispielsweise ein speziell ausgebildeter Hebel oder ein handelsüblicher Schraubenschlüssel verwendet werden. In der dargestellten Ausführungsform ist der Hebel 13 an dem rechten Ende der Welle 14 angebracht. In einer alternativen Ausgestaltung kann der Hebel 13 an dem linken Ende der Welle 14 anstelle des rechten Endes angebracht sein, oder es kann sowohl an dem linken als auch dem rechten Ende der Welle 14 ein Hebel 13 angebracht sein.

Des Weiteren kann in den Hebel 13 optional eine Vorrichtung zur Druckentlastung und ggf. zum Ölauffang, beispielsweise bei SVK-Muffen, integriert sein. Mit einer solchen Vorrichtung kann ein Restdruck an SVK-Muffen abgebaut werden, um ein Verbinden derselben zu ermöglichen.

Anstelle des Hebels 13 und anstelle des Drehelements 12 und des Zwischenelements 11 kann der Parallelogrammmechanismus 6 einen alternativen, beispielsweise einen anderen mechanischen oder einen elektrischen, hydraulischen oder pneumatischen, Verstellmechanismus aufweisen, der die Scherung des Parallelogramms bewirkt.

In dem in Fig. 2 dargestellten geöffneten Zustand des Multifunktionsverbinders 1 befindet sich der sechste Verbindungspunkt 22e, an dem das zweite Ende 11b des Zwischenelements 11 mit dem Drehelement 12 verbunden ist, oberhalb einer virtuellen Geraden, die die erste Achse X und den fünften Verbindungspunkt 22f, an dem das erste Ende 11a des Zwischenelements 11 mit dem mittleren Abschnitt 9c des ersten Seitenelements 9 verbunden ist, miteinander verbindet. In dem in Fig. 3 dargestellten geschlossenen Zustand des Multifunktionsverbinders 1 befindet sich der sechste Verbindungspunkt 22e unterhalb dieser virtuellen Geraden. D.h., der sechste Verbindungspunkt 22e überschreitet die virtuelle Gerade während des Übergangs zwischen dem geöffneten Zustand und dem geschlossenen Zustand. Der Zustand während des Übergangs, bei dem der sechste Verbindungspunkt 22e genau auf der virtuellen Geraden liegt, entspricht einem Totpunkt des durch das Drehelement 12 und das Zwischenelement 11 gebildeten Kniehebelmechanismus, bei dem der Winkel α einen maximalen Wert erreicht. Durch Überschreiten des Totpunkts ist der Multifunktionsverbinder 1 in dem geschlossenen Zustand gesichert, und der geschlossene Zustand kann lediglich unter Aufwendung eines Drehmoments entgegen dem Uhrzeigersinn auf die Drehelemente 12 verlassen werden. Somit kann der geschlossene Zustand selbst dann sicher aufrechterhalten werden, wenn der Multifunktionsverbinder 1 Erschütterungen unterliegt.

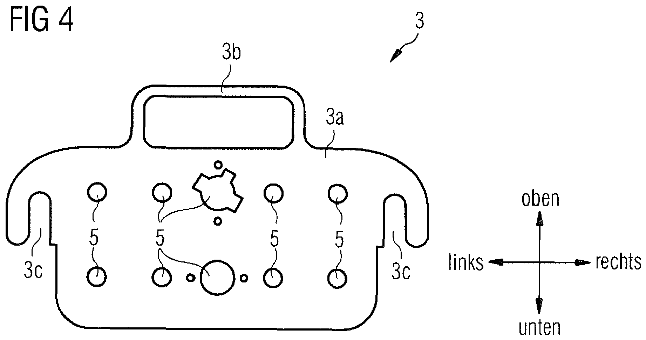

Das zweite Aufnahmeelement 3 weist die zweite Platte 3a auf. Anstelle der zweiten Platte 3a kann alternativ ein anders ausgebildetes Bauteil verwendet werden. Fig. 4 zeigt eine Draufsicht der zweiten Platte 3a von hinten. Die zweite Platte 3a weist auf der Oberseite einen Griffabschnitt 3b, der in der Form einer Schlaufe ausgebildet ist, auf und weist auf der rechten Seite und auf der linken Seite jeweils eine nach unten geöffnete Ausnehmung 3c auf. Die zweite Platte 3a weist mehrere zweite Löcher 5 auf. Die zweiten Löcher 5 sind im Wesentlichen kreisförmig ausgebildet und weisen einen Durchmesser im Bereich von 1 cm bis 8 cm, bevorzugt einen Durchmesser von 3 cm auf. Die zweiten Löcher 5 können auch eine andere, beispielsweise eine quadratische, rechteckige oder hexagonale Form aufweisen. Die zweiten Löcher 5 sind so ausgebildet, dass die zweiten Verbindungselemente 21, d.h. beispielsweise Stecker elektrischer Leitungen und/oder Verbinder/Kupplungen von Hydraulik- und/oder Pneumatikschläuchen, in den zweiten Löchern 5 angebracht werden können. Dabei können insbesondere handelsübliche Stecker bzw. Verbinder/Kupplungen verwendet werden. Es ist nicht erforderlich, speziell angefertigte Stecker bzw. Verbinder/Kupplungen zu verwenden.

Wie in Fig. 1 dargestellt ist, weist die erste Platte 2a mehrere erste Löcher 4 auf. Die ersten Löcher 4 sind im Wesentlichen kreisförmig ausgebildet und weisen einen Durchmesser im Bereich von 1 cm bis 8 cm auf. Die ersten Löcher 4 können auch eine andere, beispielsweise eine quadratische, rechteckige oder hexagonale, Form aufweisen. Die ersten Löcher 4 liegen den zweiten Löchern 5 koaxial gegenüber, d.h. es liegt jeweils ein erstes Loch (erste Öffnung) 4 einem zweiten Loch (zweite Öffnung) 5 koaxial gegenüber. Die ersten Löcher 4 sind so ausgebildet, dass die ersten Verbindungselemente 20, d.h. beispielsweise Stecker elektrischer Leitungen und/oder Verbinder/Kupplungen von Hydraulik- und/oder Pneumatikschläuchen, in den ersten Löchern 4 angebracht werden können. Dabei können insbesondere handelsübliche Stecker bzw. Verbinder/Kupplungen verwendet werden. Es ist nicht erforderlich, speziell angefertigte Stecker bzw. Verbinder zu verwenden. Die in den ersten Löchern 4 angeordneten ersten Verbindungselemente 20 sind jeweils komplementäre Gegenstücke der in den gegenüberliegenden zweiten Löchern 5 angeordneten zweiten Verbindungselemente 21.

Wenn der Multifunktionsverbinder 1 von dem geöffneten in den geschlossenen Zustand gebracht wird, werden die in den ersten Löchern 4 und den zweiten Löchern 5 angebrachten Verbindungselemente 20, 21 miteinander verbunden. Wenn der Multifunktionsverbinder 1 von dem geschlossenen in den geöffneten Zustand gebracht wird, werden die Verbindungselemente 20, 21 voneinander getrennt. Dadurch dass die erste Platte 2a und die zweite Platte 3a parallel zueinander ausgerichtet sind und diese parallele Ausrichtung während des Öffnens und Schließens des Multifunktionsverbinders 1 weitestgehend aufrechterhalten wird, werden Probleme beim Verbinden oder Trennen der Verbindungselemente 20, 21, beispielsweise ein Verkanten, vermieden. Damit ist eine einfache, schnelle und sichere Verbindung der elektrischen Leitungen bzw. der Hydraulik- oder Pneumatikschläuche 20a, 21a möglich. Der Begriff "Hydraulikschläuche" umfasst dabei unter Anderem auch Wasserschläuche und Düngemittelschläuche.

Die zweite Platte 3a ist über die Halterung 15A und die Halterung 15B lösbar an dem rechten Teilmechanismus 6a bzw. dem linken Teilmechanismus 6b angebracht. Jede der beiden Halterungen 15A, 15B weist einen Bolzen 15a mit einem Außengewinde auf, auf dem zwei Muttern 15m und zwei Flanschabschnitte 15b vorgesehen sind. Die Muttern 15m und die Flanschabschnitte 15b weisen jeweils ein Innengewinde auf. Die Positionen der Muttern 15m und der Flanschabschnitte 15b auf dem Bolzen 15a sind aufgrund des Außengewindes des Bolzens 15a und der Innengewinde der Muttern 15m und der Flanschabschnitte 15b durch Verdrehen der Muttern 15m bzw. der Flanschabschnitte 15b verstellbar. Je eine Mutter 15m und ein Flanschabschnitt 15b sind gegeneinander gekontert bzw. verspannt, so dass die Position des Flanschabschnitts 15b auf dem Bolzen 15a fest eingestellt ist. Die zwei Flanschabschnitte 15b sind mit einem Abstand, der der Dicke der zweiten Platte 3a entspricht, auf dem Bolzen 15a angeordnet. Das zweite Aufnahmeelement 3 mit der zweiten Platte 3a wird an dem Parallelogrammmechanismus 6 angebracht, indem die beiden Ausnehmungen 3c der zweiten Platte 3a von oben jeweils zwischen den Flanschabschnitten 15b auf die Bolzen 15a der Halterungen 15A, 15B aufgesetzt bzw. aufgesteckt werden. Umgekehrt kann das zweite Aufnahmeelement 3 von dem Parallelogrammmechanismus 6 gelöst werden, indem die das zweite Aufnahmeelement 3 beispielsweise unter Verwendung des Griffabschnitts 3b nach oben von den Bolzen 15a gehoben wird.

Das zweite Ende 13b des Hebels 13 ist optional als Gabelschlüssel mit einer Schlüsselweite, die zu den Muttern 15m passt, ausgebildet. Somit dann der Hebel 13 im von dem Anbringungsabschnitt der Welle 14 gelösten Zustand zum Verstellen, insbesondere zum Nachjustieren, der Muttern 15m verwendet werden.

Wie oben beschreiben wurde, können die Positionen der Flanschabschnitte 15b in der Längserstreckungsrichtung der Bolzen 15a, d.h. in der Vorne-Hinten-Richtung, durch Drehen der mit dem Innengewinde auf das Außengewinde der Bolzen 15a aufgeschraubten Flanschabschnitte 15b verstellt bzw. angepasst werden. Die zweite Platte 3a kann zwischen den Flanschabschnitten 15b festgeklemmt werden, indem die Flanschabschnitte 15b nach dem Aufsetzen der zweiten Platte 3a, beispielsweise unter Verwendung des als Gabelschlüssel ausgebildeten zweiten Endes 13b des Hebels 13, festgezogen werden. Ein Festklemmen der zweiten Platte 3a durch die Flanschabschnitte 15b ist jedoch nicht zwingend erforderlich. Wenn der Abstand der Flanschabschnitte 15b im Wesentlichen entsprechend der Dicke des zweiten Platte 3a eingestellt ist, kann die zweite Platte mit einem geringen Spiel zwischen den Flanschabschnitten 15b auf die Bolzen 15a aufgesetzt werden. In diesem Fall können die Positionen der Flanschabschnitte 15b in der Längserstreckungsrichtung der Bolzen 15a lediglich zur Nachjustierung verstellbar sein. Alternativ können die Positionen der Flanschabschnitte 15b in der Längserstreckungsrichtung der Bolzen 15a fest sein. In diesem Fall sind das Außengewinde der Bolzen 15a, das Innengewinde der Flanschabschnitte 15b und die Muttern 15m nicht erforderlich.

Das erste Aufnahmeelement 2 und der Parallelogrammmechanismus 6 bilden eine Einheit. Das erste Aufnahmeelement 2 und der Parallelogrammmechanismus 6 können beispielsweise an einem Zugfahrzeug oder an einem Anhänger fest angebracht sein. Dementsprechend können elektrische Kabel oder Hydraulik- oder Pneumatikschläuche 20a des Zugfahrzeugs oder des Anhängers, an dem das erste Aufnahmeelement 2 und der Parallelogrammmechanismus 6 angebracht sind, fest mit dem ersten Aufnahmeelement 2 verbunden sein. Andererseits können elektrische Kabel oder Hydraulik- oder Pneumatikschläuche 21a des Zugfahrzeugs oder des Anhängers, an dem das erste Aufnahmeelement 2 und der Parallelogrammmechanismus 6 nicht angebracht sind, fest mit dem zweiten Aufnahmeelement 3 verbunden sein. Bei einer Trennung des Zugfahrzeugs und des Anhängers wird der Multifunktionsverbinder 1 in den geöffneten Zustand gebracht, in dem die zugfahrzeugseitigen und die anhängerseitigen Kabel und Schläuche 20a, 21a an den entsprechenden Verbindungselementen 20, 21 voneinander getrennt sind. Das zweite Aufnahmeelement wird in dem geöffneten Zustand des Multifunktionsverbinders 1 von dem Parallelogrammmechanismus 6 bzw. den Halterungen 15A, 15B gelöst und kann beispielsweise an einer entsprechenden Aufbewahrungshalterung an dem Zugfahrzeug oder dem Anhänger, an dem das erste Aufnahmeelement 2 und der Parallelogrammmechanismus 6 nicht angebracht sind, angebracht werden. Die Aufbewahrungshalterung kann ähnlich den Halterungen 15A, 15B zwei Bolzen 15a und Flanschabschnitte 15b aufweisen, und die Ausnehmungen 3c des zweiten Aufnahmeelements 3 können auf die Bolzen 15a der Aufbewahrungshalterung aufgesetzt werden. Bei Verbindung des Zugfahrzeugs und des Anhängers kann das zweite Aufnahmeelement aus der Aufbewahrungshalterung an dem Zugfahrzeug oder dem Anhänger, an dem das erste Aufnahmeelement 2 und der Parallelogrammmechanismus 6 nicht angebracht sind, genommen und in der oben beschriebenen Weise in dem geöffneten Zustand des Multifunktionsverbinders 1 mit dem Parallelogrammmechanismus 6 bzw. den Halterungen 15A, 15B verbunden werden. Anschließend wird der Multifunktionsverbinder 1 in den geschlossenen Zustand gebracht, so dass die zugfahrzeugseitigen und die anhängerseitigen Kabel und Schläuche 20a, 21a über die Verbindungselemente 20, 21 miteinander verbunden sind.

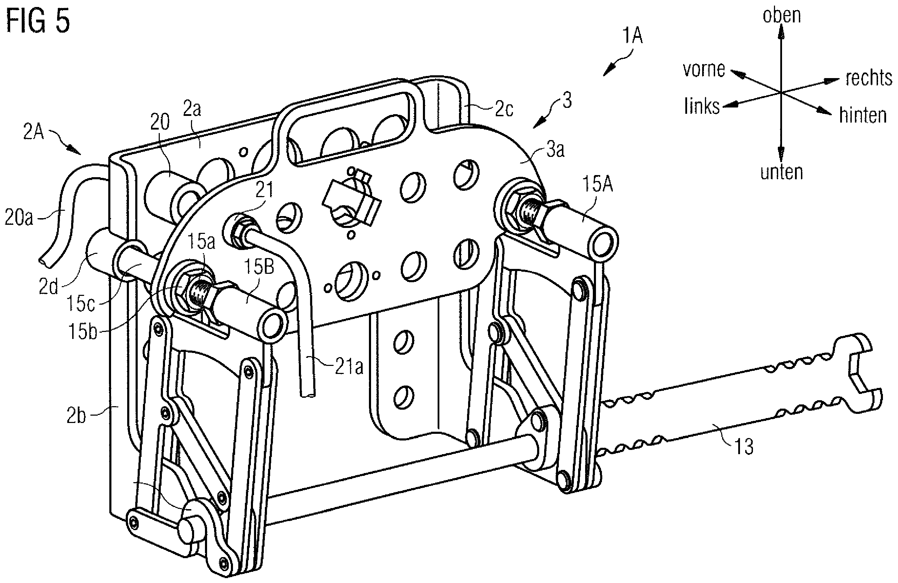

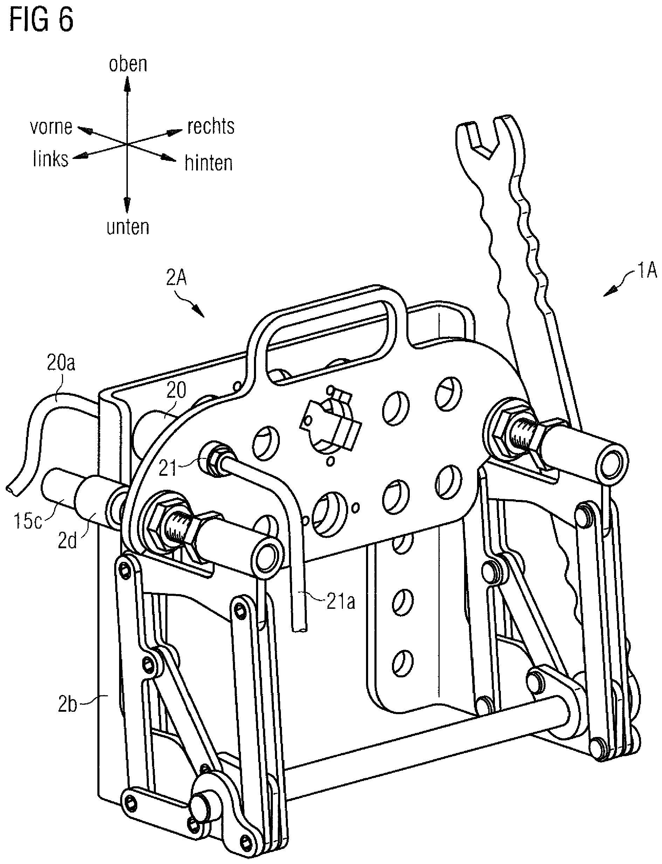

Im Folgenden wird eine zweite Ausführungsform der vorliegenden Offenbarung mit Bezug auf die Figuren 5 und 6 beschrieben. Ein Multifunktionsverbinder 1A der zweiten Ausführungsform entspricht im Wesentlichen dem Multifunktionsverbinder 1 der ersten Ausführungsform.

Bei dem Multifunktionsverbinder 1A der zweiten Ausführungsform weist ein erstes Aufnahmeelement 2A, das im Wesentlichen dem ersten Aufnahmeelement 2 der ersten Ausführungsform entspricht, auf beiden Seiten in der Links-Rechts-Richtung an der linken Seitenwand 2b und der rechten Seitenwand 2c auf Höhe der Halterungen 15A, 15B jeweils eine in der Vorne-Hinten-Richtung ausgerichtete rohrförmige Hülse 2d auf, wie in Fig. 5 gezeigt ist. Die Bolzen 15a der Halterungen 15A, 15B stehen bei der zweiten Ausführungsform in Richtung auf das erste Aufnahmeelement 2A vor. Ein vorderes Ende 15c jedes der Bolzen 15a auf der Seite des ersten Aufnahmeelements 2A ist in die entsprechende Hülse 2d eingefügt und wird durch die Hülse 2d geführt.

Die Länge der Bolzen 15a ist derart gewählt, dass die vorderen Enden 15c auch in dem in Fig. 5 gezeigten geöffneten Zustand des Multifunktionsverbinders 1A in die entsprechenden Hülsen 2d hineinragen. Die vorderen Enden 15c der Bolzen stehen beispielsweise um mindestens 5 cm oder 10 cm oder 20 cm von der zweiten Platte 3a nach vorne in Richtung auf die erste Platte 2a vor.

Die Länge der Bolzen 15a kann so gewählt sein, dass die vorderen Enden 15c in dem in Fig. 5 gezeigten geöffneten Zustand des Multifunktionsverbinders 1A nicht nach vorne aus den Hülsen 2d herausragen. In dem in Fig. 6 gezeigten geschlossenen Zustand des Multifunktionsverbinders 1A ragen die vorderen Enden 15c der Bolzen 15a nach vorne aus den Hülsen 2d heraus.

Im Bereich der in die Hülsen 2d eingefügten vorderen Enden 15c weisen die Bolzen 15a kein Außengewinde auf. Die vorderen Enden 15c der Bolzen 15a sind mit einem Spiel in die entsprechenden Hülsen 2d eingefügt, d.h., ein Außendurchmesser der Bolzen 15a an den vorderen Enden 15c ist geringer als ein Innendurchmesser der Hülsen 2d. Beispielsweise ist der Außendurchmesser der Bolzen 15a an den vorderen Enden 15c um 0,1 mm bis 2 mm, bevorzugt 0,5 mm, geringer als der Innendurchmesser der Hülsen 2d. Der Außendurchmesser der Bolzen 15a an den vorderen Enden 15c ist beispielsweise im Bereich von 10 mm bis 30 mm. Bevorzugt beträgt der Außendurchmesser der Bolzen 15a an den vorderen Enden 15c 22 mm. Der Innendurchmesser der Hülsen 2d ist beispielsweise im Bereich von 12 mm bis 38 mm. Bevorzugt beträgt der Innendurchmesser der Hülsen 2d 22,5 mm.

Durch die in den Hülsen 2d verlaufenden vorderen Enden 15c der Bolzen 15a wird die Bewegung der Halterungen 15A, 15B und damit des zweiten Aufnahmeelements 3 bei der Scherung des Parallelogrammmechanismus 6, d.h. bei dem Übergang zwischen dem geöffneten Zustand und dem geschlossenen Zustand des Multifunktionsverbinders 1A, geführt. Durch die Führung wird die Position des zweiten Aufnahmeelements 3 beispielsweise in der Links-Rechts-Richtung stabilisiert.

In der vorliegenden Ausführungsform sind die Bolzen 15a, auf die das zweite Aufnahmeelement 3 aufgesetzt bzw. aufgesteckt wird, identisch mit den Bolzen 15a, die zur Führung der Bewegung des zweiten Aufnahmeelements 3 durch die Hülsen 2d verlaufen. Es können jedoch auch separate Bolzen zum Aufsetzen bzw. Aufstecken des zweiten Aufnahmeelements 3 und zur Führung der Bewegung des zweiten Aufnahmeelements 3 vorgesehen werden.

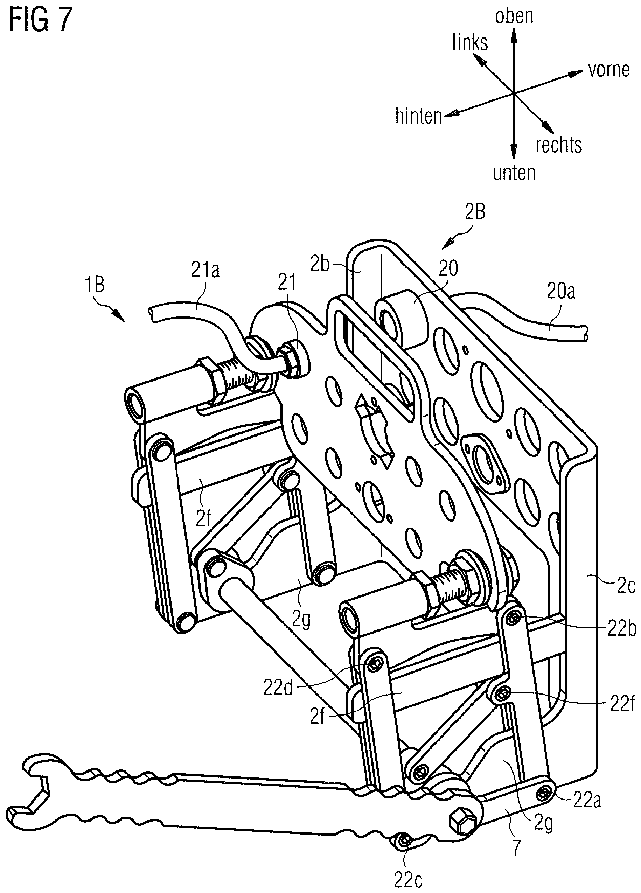

Im Folgenden wird eine dritte Ausführungsform der vorliegenden Offenbarung mit Bezug auf Figur 7 beschrieben. Ein Multifunktionsverbinder 1B der dritten Ausführungsform entspricht im Wesentlichen dem Multifunktionsverbinder 1 der ersten Ausführungsform.

Bei dem Multifunktionsverbinder 1B der dritten Ausführungsform weist ein erstes Aufnahmeelement 2B, das im Wesentlichen dem ersten Aufnahmeelement 2 der ersten Ausführungsform entspricht, auf beiden Seiten in der Links-Rechts-Richtung an der linken Seitenwand 2b und der rechten Seitenwand 2c auf einer Höhe zwischen dem ersten Verbindungspunkt 22a und dem zweiten Verbindungspunkt 22b bzw. zwischen dem dritten Verbindungspunkt 22c und dem vierten Verbindungspunkt 22d in der Oben-Unten-Richtung jeweils ein von der linken Seitenwand 2b bzw. der rechten Seitenwand 2c nach hinten vorstehendes längliches Flacheisen 2f auf, wie in Fig. 7 gezeigt ist. In der vorliegenden Ausführungsform sind die Flacheisen 2f auf einer Höhe zwischen dem fünften Verbindungspunkt 22f und dem zweiten Verbindungspunkt 22b in der Oben-Unten-Richtung vorgesehen.

Die Flacheisen 2f ragen jeweils in einen Zwischenraum zwischen den zwei parallel zueinander angeordneten Flacheisen 9d und 9e des ersten Seitenelements 9 und in einen Zwischenraum zwischen den zwei parallel zueinander angeordneten Flacheisen 10d und 10e des zweiten Seitenelements 10. Die seitlichen Oberflächen der Flacheisen 2f in der Rechts-Links-Richtung können an den jeweiligen gegenüberliegenden seitlichen Oberflächen der Flacheisen 9d und 9e bzw. der Flacheisen 10d und 10e anliegen.

Die Länge der Flacheisen 2f ist derart gewählt, dass sich die hinteren Enden der Flacheisen 2f auch in dem in Fig. 7 gezeigten geöffneten Zustand des Multifunktionsverbinders 1B in dem Zwischenraum zwischen den zwei Flacheisen 10d und 10e des zweiten Seitenelements 10 befinden. Die Flacheisen 2f können jedoch auch kürzer ausgebildet sein. Beispielsweise kann die Länge der Flacheisen 2f derart gewählt sein, dass die Flacheisen 2f lediglich in den Zwischenraum zwischen den zwei Flacheisen 9d und 9e des ersten Seitenelements 9, nicht aber in den Zwischenraum zwischen den zwei Flacheisen 10d und 10e des zweiten Seitenelements 10 ragen. Die Länge der Flacheisen 2f ist beispielsweise mindestens 10 cm oder mindestens 20 cm. Bevorzugst beträgt die Länge der Flacheisen 2f 18,5 cm.

Die Flacheisen 2f weisen beispielsweise eine Dicke im Bereich von 3 mm bis 10 mm auf. Bevorzugt beträgt die Dicke der Flacheisen 2f 8 mm. Eine Höhe der Flacheisen 2f in der Oben-Unten-Richtung kann im Bereich von 1 cm bis 5 cm liegen. Bevorzugt beträgt die Höhe der Flacheisen 2f 3 cm. Die Flacheisen 2f können eine im Wesentlichen rechteckige Form, beispielsweise mit abgerundeten Ecken, aufweisen, wie in Fig. 7 gezeigt ist. Die Flacheisen 2f können integral mit der linken bzw. rechten Seitenwand 2b, 2c ausgebildet oder daran, beispielsweise durch Verschweißen, angebracht sein.

Durch die in den Zwischenräumen zwischen den Flacheisen 9d und 9e bzw. 10d und 10e verlaufenden Flacheisen 2f wird die Bewegung des Parallelogrammmechanismus 6 und damit des zweiten Aufnahmeelements 3 bei der Scherung des Parallelogrammmechanismus 6, d.h. bei dem Übergang zwischen dem geöffneten Zustand und dem geschlossenen Zustand des Multifunktionsverbinders 1B, geführt. Durch die Führung wird die Position des zweiten Aufnahmeelements 3 in der Links-Rechts-Richtung stabilisiert.

Eine Stabilisierung des Parallelogrammmechanismus 6 kann zusätzlich oder alternativ durch in der ersten bis dritten Ausführungsform vorgesehene in der Oben-Unten-Richtung vergrößerte Abschnitte 2g der linken und der rechten Seitenwand 2b, 2c, die beispielsweise in Fig. 7 gezeigt sind, erfolgen. Die nach innen in Richtung auf die Zwischenräume gewandten Oberflächen der Flacheisen 9d und 9e der ersten Seitenelemente 9 können an den gegenüberliegenden Oberflächen der vergrößerten Abschnitte 2g anliegen. Im Bereich der vergrößerten Abschnitte 2g, die durch die jeweiligen Zwischenräume zwischen den Flacheisen 9d und 9e der ersten Seitenelemente 9 verlaufen, können die Seitenwände 2b, 2c eine Höhe von mindestens 3 cm aufweisen. Bevorzugt beträgt die Höhe der Seitenwände 2b, 2c 3,5 cm.

In den gezeigten Ausführungsformen sind die rechte Halterung 15A und die linke Halterung 15B separat voneinander ausgebildet. Die rechte Halterung 15A und die linke Halterung 15B können jedoch auch miteinander verbunden sein und können gemeinsam eine Halterung ausbilden.

Das erste Aufnahmeelement 2 und/oder das zweite Aufnahmeelement 3 kann einen eingebauten bzw. angebauten Auffangbehälter für Lecköl/- wasser aufweisen. Der Auffangbehälter kann unterhalb der Löcher 4, 5 an der ersten Platte 2a und/oder der zweiten Platte 3a angebracht sein.

Obwohl die bevorzugten Ausführungsformen dieser Offenbarung hierin beschrieben worden ist, können Verbesserungen und Modifikationen hierin eingearbeitet sein, ohne vom Schutzbereich der folgenden Ansprüche abzuweichen.

## Patentansprüche

1. Multifunktionsverbinder (1) für ein Fahrzeug oder einen Fahrzeuganhänger zum Verbinden und Trennen von Verbindungselementen (20, 21) von Leitungen (20a, 21a), mit:
- einem ersten Aufnahmeelement (2) zur Aufnahme mindestens eines ersten Verbindungselements (20),
- einem zweiten Aufnahmeelement (3) zur Aufnahme mindestens eines mit dem ersten Verbindungselement (20) verbindbaren zweiten Verbindungselements (21), und
- einem Parallelogrammmechanismus (6), der dazu ausgebildet ist, das zweite Aufnahmeelement (3) im Wesentlichen linear entlang einer Verbindungsrichtung des ersten Verbindungselements (20) und des zweiten Verbindungselements (21) zwischen einem geöffneten Zustand, in dem das ersten Verbindungselement (20) und das zweite Verbindungselement (21) voneinander getrennt sind, und einem geschlossenen Zustand, in dem das erste Verbindungselement (20) und das zweite Verbindungselement (21) miteinander verbunden sind, relativ zu dem ersten Aufnahmeelement (2) zu bewegen.

2. Multifunktionsverbinder nach Anspruch 1, wobei der Parallelogrammmechanismus (6) aufweist:
- eine Halterung (15A, 15B) zur lösbaren Anbringung des zweiten Aufnahmeelements (3) an dem Parallelogrammmechanismus (6),
- ein erstes Seitenelement (9), das das erste Aufnahmeelement (2) und die Halterung (15A, 15B) miteinander verbindet, und das in einer ersten Ebene parallel zu der Verbindungsrichtung des ersten Verbindungselements (20) und des zweiten Verbindungselements (21) relativ zu dem ersten Aufnahmeelement (2) und der Halterung (15A, 15B) schwenkbar ist, und
- ein zweites Seitenelement (10), das das erste Aufnahmeelement (2) und die Halterung (15A, 15B) miteinander verbindet, und das in einer zweiten Ebene, die identisch oder parallel zu der ersten Ebene ist, relativ zu dem ersten Aufnahmeelement (2) und der Halterung (15A, 15B) schwenkbar ist,
wobei das zweite Seitenelement (10) in der Verbindungsrichtung des ersten Verbindungselements (20) und des zweiten Verbindungselements (21) relativ zu dem ersten Seitenelement (9) versetzt ist.

3. Multifunktionsverbinder (1) nach Anspruch 2, wobei
- das erste Seitenelement (9) an einem ersten Verbindungspunkt (22a) gelenkig mit dem ersten Aufnahmeelement (2) verbunden ist und an einem zweiten Verbindungspunkt (22b) gelenkig mit der Halterung (15A, 15B) verbunden ist,
- das zweite Seitenelement (10) an einem dritten Verbindungspunkt (22c) gelenkig mit dem ersten Aufnahmeelement (2) verbunden ist und an einem vierten Verbindungspunkt (22d) gelenkig mit der Halterung (15A, 15B) verbunden ist, und
- die Verbindungspunkte (22a-d) des ersten Seitenelements (9) und des zweiten Seitenelements (10) mit dem ersten Aufnahmeelement (2) und der Halterung (15A, 15B) in einer Richtung senkrecht zu der ersten Ebene und der zweiten Ebene betrachtet an den Eckpunkten eines Parallelogramms angeordnet sind.

4. Multifunktionsverbinder (1) nach Anspruch 2 oder 3, wobei
- das erste Seitenelement (9) ein längliches Bauteil aufweist, ein erstes Ende (9a) des länglichen Bauteils des ersten Seitenelements (9) in der Längserstreckungsrichtung des ersten Seitenelements (9) gelenkig mit dem ersten Aufnahmeelement (2) verbunden ist, und ein zweites Ende (9b) des länglichen Bauteils des ersten Seitenelements (9) in der Längserstreckungsrichtung gelenkig mit der Halterung (15A, 15B) verbunden ist,
- das zweite Seitenelement (10) ein längliches Bauteil aufweist, ein erstes Ende (10a) des länglichen Bauteils des zweiten Seitenelements (10) in der Längserstreckungsrichtung des zweiten Seitenelements (10) gelenkig mit dem ersten Aufnahmeelement (2) verbunden ist, und ein zweites Ende (10b) des länglichen Bauteils des zweiten Seitenelements (10) in der Längserstreckungsrichtung gelenkig mit der Halterung (15A, 15B) verbunden ist, und
- die Längserstreckungsrichtung des länglichen Bauteils des ersten Seitenelements (9) im Wesentlichen parallel zu der Längserstreckungsrichtung des länglichen Bauteils des zweiten Seitenelements (10) verläuft.

5. Multifunktionsverbinder (1) nach einem der Ansprüche 2 bis 4, wobei der Parallelogrammmechanismus (6) ferner aufweist:
- ein Drehelement (12), das an dem ersten Aufnahmeelement (2) angebracht und um eine erste Achse (X) senkrecht zu der ersten Ebene und der zweiten Ebene relativ zu dem ersten Aufnahmeelement (2) drehbar ist, und
- ein Zwischenelement (11), das gelenkig mit dem ersten Seitenelement (9) verbunden ist und gelenkig mit einem exzentrischen Abschnitt des Drehelements (12) verbunden ist,
wobei das Zwischenelement (11) so mit dem ersten Seitenelement (9) verbunden ist, dass das erste Seitenelement (9) durch eine mit einer Drehung des Drehelements (12) um die erste Achse (X) verbundene Bewegung des Zwischenelements (11) in der ersten Ebene relativ zu dem ersten Aufnahmeelement (2) geschwenkt wird, und
wobei das Zwischenelement (11) und das Drehelement (12) einen Kniehebelmechanismus ausbilden, dessen Totpunkt beim Übergang zwischen dem geöffneten Zustand und dem geschlossenen Zustand überschritten wird.

6. Multifunktionsverbinder (1) nach Anspruch 5, wobei
- der Parallelogrammmechanismus (6) einen ersten Teilmechanismus (6a) und einen zweiten Teilmechanismus (6b) aufweist, die in einer Richtung senkrecht zu der ersten Ebene und der zweiten Ebene um einen dritten Abstand (D3) von mindestens 3 cm zueinander versetzt sind,
- jeder von dem ersten Teilmechanismus (6a) und dem zweiten Teilmechanismus (6b) ein erstes Seitenelement (9), ein zweites Seitenelement (10), ein Zwischenelement (11) und ein Drehelement (12) aufweist, und
- das Drehelement (12) des ersten Teilmechanismus (6a) und das Drehelement (12) des zweiten Teilmechanismus (6b) über eine Welle (14), die sich entlang der ersten Achse (X) erstreckt, miteinander verbunden sind.

7. Multifunktionsverbinder (1) nach Anspruch 5 oder 6, wobei der Parallelogrammmechanismus (6) eine Aufnahme für eine Kraftaufbringungsvorrichtung (13) aufweist, und das Drehelement (12) mittels der Kraftaufbringungsvorrichtung (13) um die erste Achse (X) gedreht werden kann.

8. Multifunktionsverbinder (1) nach einem der vorhergehenden Ansprüche, wobei das erste Aufnahmeelement (2) zur Aufnahme mindestens zweier erster Verbindungselemente (20) ausgebildet ist und das zweite Aufnahmeelement (3) zur Aufnahme mindestens zweier zweiter Verbindungselemente (21) ausgebildet ist, wobei die Verbindungsrichtungen der ersten Verbindungselemente (20) und der zweiten Verbindungselemente (21) parallel zueinander ausgerichtet sind.

9. Multifunktionsverbinder (1A) nach einem der Ansprüche 2 bis 8, wobei
- eines bzw. eine von dem ersten Aufnahmeelement (2A) und der Halterung (15A, 15B) eine parallel zu der Verbindungsrichtung des ersten Verbindungselements (20) und des zweiten Verbindungselements (21) ausgerichtete rohrförmige Hülse (2d) aufweist, und
- das bzw. die andere von dem ersten Aufnahmeelement (2A) und der Halterung (15A, 15B) einen parallel zu der Verbindungsrichtung des ersten Verbindungselements (20) und des zweiten Verbindungselements (21) ausgerichteten Bolzen (15a) aufweist, der durch die Hülse (2d) verläuft.

10. Multifunktionsverbinder (1B) nach einem der Ansprüche 2 bis 9, wobei
- das erste Seitenelement (9) zwei parallel zueinander angeordnete längliche Flacheisen (9d, 9e) aufweist, und
- das erste Aufnahmeelement (2B) ein längliches, in der Verbindungsrichtung des ersten Verbindungselements (20) und des zweiten Verbindungselements (21) ausgerichtetes Flacheisen (2f) aufweist, das durch einen Zwischenraum zwischen den zwei parallel zueinander angeordneten länglichen Flacheisen (9d, 9e) des ersten Seitenelements (9) verläuft.

11. Multifunktionsverbinder (1) nach einem der vorhergehenden Ansprüche, wobei das zweite Aufnahmeelement (3) einen Griffabschnitt (3b) aufweist.

12. Multifunktionsverbinder (1) nach einem der Ansprüche 2 bis 11, wobei
- die Halterung (15A, 15B) zwei Bolzen (15a) aufweist,
- das zweite Aufnahmeelement (3) zwei Ausnehmungen (3c) aufweist, und
- das zweite Aufnahmeelement (3) auf die Halterung (15A, 15B) aufsteckbar ist, indem die zwei Ausnehmungen (3c) auf die zwei Bolzen (15a) gesetzt werden.

13. Multifunktionsverbinder (1) nach einem der vorhergehenden Ansprüche, wobei
- das erste Aufnahmeelement (2) eine erste Platte (2a) aufweist, in der mindestens eine erste Öffnung (4) zur Aufnahme des mindestens einen ersten Verbindungselements (20) ausgebildet ist, und
- das zweite Aufnahmeelement (3) eine zweite Platte (3a) aufweist, in der mindestens eine zweite Öffnung (5) zur Aufnahme des mindestens einen zweiten Verbindungselements (21) ausgebildet ist.

14. Baueinheit, die dazu ausgebildet ist, an einem Zugfahrzeug befestigt zu werden, mit einem ersten Aufnahmeelement (2) und einem Parallelogrammmechanismus (6) für einen Multifunktionsverbinder (1) nach einem der Ansprüche 1 bis 13, wobei
- das erste Aufnahmeelement (2) eine erste Platte (2a) mit mindestens einer ersten Öffnung (4) zur Aufnahme eines ersten Verbindungselements (20) aufweist, und
- der Parallelogrammmechanismus (6) an dem ersten Aufnahmeelement (2) angelenkt ist und dazu ausgebildet ist, ein an dem Parallelogrammmechanismus (6) lösbar anbringbares zweites Aufnahmeelement (3) zur Aufnahme mindestens eines mit dem ersten Verbindungselement (20) verbindbaren zweiten Verbindungselements (21) im Wesentlichen linear entlang einer Verbindungsrichtung des ersten Verbindungselements (20) und des zweiten Verbindungselements (21) zu bewegen.

## Claims

1. A multifunction connector (1) for a vehicle or a vehicle trailer for connecting and disconnecting connection members (20, 21) of lines (20a, 21a), comprising:
- a first receiving member (2) for receiving at least one first connection member (20),
- a second receiving member (3) for receiving at least one second connection member (21) that is connectable with the first connection member (20), and
- a parallelogram mechanism (6), which is configured to move the second receiving member (3) substantially linearly along a connection direction of the first connection member (20) and the second connection member (21) between an opened state, where the first connection member (20) and the second connection member (21) are disconnected from each other, and a closed state, where the first connection member (20) and the second connection member (21) are connected with each other, relative to the first receiving member (2).

2. The multifunction connector according to claim 1, wherein the parallelogram mechanism (6) comprises:
- a holder (15A, 15B) for detachably attaching the second receiving member (3) to the parallelogram mechanism (6),
- a first side member (9), which connects the first receiving member (2) and the holder (15A, 15B) with each other, and is pivotable in a first plane in parallel with the connection direction of the first connection member (20) and the second connection member (21), relative to the first receiving member (2) and the holder (15A, 15B), and
- a second side member (10), which connects the first receiving member (2) and the holder (15A, 15B) with each other, and is pivotable in a second plane, which is identical with or in parallel with the first plane, relative to the first receiving member (2) and the holder (15A, 15B),
wherein the second side member (10) is offset relative to the first side member (9) in the connection direction of the first connection member (20) and the second connection member (21).

3. The multifunction connector (1) according to claim 2, wherein
- the first side member (9) is hingedly connected with the first receiving member (2) at a first connection point (22a), and hingedly connected with the holder (15A, 15B) at a second connection point (22b),
- the second side member (10) is hingedly connected with the first receiving member (2) at a third connection point (22c), and hingedly connected with the holder (15A, 15B) at a fourth connection point (22d), and
- the connection points (22a-d) of the first side member (9) and the second side member (10) with the first receiving member (2) and the holder (15A, 15B) are arranged at the corner points of a parallelogram, when viewed in a direction perpendicular to the first plane and the second plane.

4. The multifunction connector (1) according to claim 2 or 3, wherein
- the first side member (9) comprises an elongate component, a first end (9a) of the elongate component of the first side member (9) in the longitudinal direction of the first side member (9) being hingedly connected with the first receiving member (2), and a second end (9b) of the elongate component of the first side member (9) in the longitudinal direction being hingedly connected with the holder (15A, 15B),
- the second side member (10) comprises an elongate component, a first end (10a) of the elongate component of the second side member (10) in the longitudinal direction of the second side member (10) being hingedly connected with the first receiving member (2), and a second end (10b) of the elongate component of the second side member (10) in the longitudinal direction being hingedly connected with the holder (15A, 15B), and
- the longitudinal direction of the elongate component of the first side member (9) is substantially in parallel with the longitudinal direction of the elongate component of the second side member (10).

5. The multifunction connector (1) according to any one of claims 2 to 4, wherein the parallelogram mechanism (6) further comprises:
- a rotary member (12) attached to the first receiving member (2) and rotatable about a first axis (X), which is perpendicular to the first plane and the second plane, relative to the first receiving member (2), and
- an intermediate member (11) hingedly connected with the first side member (9), and hingedly connected with an eccentric portion of the rotary member (12),
wherein the intermediate member (11) is connected with the first side member (9) such that the first side member (9) is pivoted in the first plane relative to the first receiving member (2), due to a movement of the intermediate member (11) associated with a rotation of the rotary member (12) about the first axis (X), and
wherein the intermediate member (11) and the rotary member (12) form a knee lever mechanism, the dead center of which is exceeded at the transition between the opened state and the closed state.

6. The multifunction connector (1) according to claim 5, wherein
- the parallelogram mechanism (6) comprises a first sub-mechanism (6a) and a second sub-mechanism (6b), which are offset with respect to each other by a third distance (D3) of at least 3 cm, in a direction perpendicular to the first plane and the second plane,
- each of the first sub-mechanism (6a) and the second sub-mechanism (6b) comprises a first side member (9), a second side member (10), an intermediate member (11), and a rotary member (12), and
- the rotary member (12) of the first sub-mechanism (6a) and the rotary member (12) of the second sub-mechanism (6b) are connected with each other via a shaft (14) that extends along the first axis (X).

7. The multifunction connector (1) according to claim 5 or 6, wherein the parallelogram mechanism (6) comprises a seat for a force application device (13), and the rotary member (12) can be rotated about the first axis (X) by means of the force application device (13).

8. The multifunction connector (1) according to any one of the preceding claims, wherein the first receiving member (2) is configured to receive at least two first connection members (20), and the second receiving member (3) is configured to receive at least two second connection members (21), wherein the connection directions of the first connection members (20) and the second connection members (21) are in parallel with each other.

9. The multifunction connector (1A) according to any one of claims 2 to 8, wherein
- one of the first receiving member (2A) and the holder (15A, 15B), respectively, comprises a tubular sleeve (2d) oriented in parallel with the connection direction of the first connection member (20) and the second connection member (21), and
- the respective other one of the first receiving member (2A) and the holder (15A, 15B) comprises a bolt (15a) oriented in parallel with the connection direction of the first connection member (20) and the second connection member (21), and extending through the sleeve (2d).

10. The multifunction connector (1B) according to any one of claims 2 to 9, wherein
- the first side member (9) comprises two elongate flat irons (9d, 9e) that are arranged in parallel with each other, and
- the first receiving member (2B) comprises an elongate flat iron (2f) oriented in the connection direction of the first connection member (20) and the second connection member (21), and extending through a space between the two elongate flat irons (9d, 9e) of the first side member (9), which flat irons are arranged in parallel with each other.

11. The multifunction connector (1) according to any one of the preceding claims, wherein the second receiving member (3) comprises a grip portion (3b).

12. The multifunction connector (1) according to any one of claims 2 to 11, wherein
- the holder (15A, 15B) comprises two bolts (15a),
- the second receiving member (3) comprises two recesses (3c), and
- the second receiving member (3) can be attached to the holder (15A, 15B), by fitting the two recesses (3c) on the two bolts (15a).

13. The multifunction connector (1) according to any one of the preceding claims, wherein
- the first receiving member (2) comprises a first plate (2a), in which at least one first opening (4) for receiving the at least one first connection member (20) is formed, and
- the second receiving member (3) comprises a second plate (3a), in which at least one second opening (5) for receiving the at least one second connection member (21) is formed.

14. An assembly unit configured to be mounted to a towing vehicle, the assembly unit comprising a first receiving member (2) and a parallelogram mechanism (6) for a multifunction connector (1) according to any one of claims 1 to 13, wherein
- the first receiving member (2) comprises a first plate (2a) provided with at least one first opening (4) for receiving a first connection member (20), and
- the parallelogram mechanism (6) is hinged to the first receiving member (2), and configured to move a second receiving member (3) for receiving at least one second connection member (21) connectable with the first connection member (20), which second receiving member (3) is detachably attachable to the parallelogram mechanism (6), substantially linearly along a connection direction of the first connection member (20) and the second connection member (21).

## Revendications

1. Connecteur multifonction (1) pour un véhicule ou une remorque de véhicule, destiné à relier et à séparer des éléments de liaison (20, 21) de lignes (20a, 21a), avec :
- un premier élément d'accueil (2) destiné à accueillir au moins un premier élément de liaison (20),
- un deuxième élément d'accueil (3) destiné à accueillir au moins un deuxième élément de liaison (21) qui peut être relié au premier élément de liaison (20), et
- un mécanisme à parallélogramme (6) qui est configuré pour déplacer le deuxième élément d'accueil (3) par rapport au premier élément d'accueil (2) de manière sensiblement linéaire le long d'une direction de liaison du premier élément de liaison (20) et du deuxième élément de liaison (21) entre un état ouvert, dans lequel le premier élément de liaison l'élément (20) et le deuxième élément de liaison (21) sont séparés l'un de l'autre, et un état fermé, dans lequel le premier élément de liaison (20) et le deuxième élément de liaison (21) sont reliés entre eux pour.

2. Connecteur multifonction selon la revendication 1, dans lequel le mécanisme à parallélogramme (6) comprend :
- un support (15A, 15B) pour fixer de façon amovible le deuxième élément d'accueil (3) au mécanisme à parallélogramme (6),
- un premier élément latéral (9) reliant le premier élément d'accueil (2) et le support (15A, 15B) entre eux, et pivotant dans un premier plan parallèle à la direction de liaison du premier élément de liaison (20) et du deuxième l'élément de liaison (21) par rapport au premier élément d'accueil (2) et au support (15A, 15B), et
- un deuxième élément latéral (10) reliant le premier élément d'accueil (2) et le support (15A, 15B) entre eux et pivotant dans un deuxième plan, identique ou parallèle au premier plan, par rapport au premier élément d'accueil (2) et au support (15A, 15B),
dans lequel le deuxième élément latéral (10) est décalé dans la direction de liaison du premier élément de liaison (20) et du deuxième élément de liaison (21) par rapport au premier élément latéral (9).

3. Connecteur multifonction (1) selon la revendication 2, dans lequel
- le premier élément latéral (9) est articulé au premier élément d'accueil (2) en un premier point de liaison (22a) et est articulé au support (15A, 15B) en un deuxième point de liaison (22b),
- le deuxième élément latéral (10) est articulé au premier élément d'accueil (2) en un troisième point de liaison (22c) et au support (15A, 15B) en un quatrième point de liaison (22d), et
- les points de liaison (22a-d) du premier élément latéral (9) et du deuxième élément latéral (10) avec le premier élément d'accueil (2) et le support (15A, 15B) sont situés aux coins d'un parallélogramme vus dans une direction perpendiculaire au premier plan et au deuxième plan.

4. Connecteur multifonction (1) selon la revendication 2 ou 3, dans lequel
- le premier élément latéral (9) a un élément allongé, une première extrémité (9a) de l'élément allongé du premier élément latéral (9) dans la direction d'étendue longitudinale du premier élément latéral (9) étant articulée au premier élément d'accueil (2), et une deuxième extrémité (9b) de l'élément allongé du premier élément latéral (9) dans la direction d'étendue longitudinale étant articulée au support (15A, 15B),
- le deuxième élément latéral (10) a un élément allongé, une première extrémité (10a) de l'élément allongé du deuxième élément latéral (10) dans la direction d'étendue longitudinale du deuxième élément latéral (10) étant articulée au premier élément d'accueil (2), et une deuxième extrémité (10b) de l'élément allongé du deuxième élément latéral (10) étant reliée de manière pivotante dans la direction d'étendue longitudinale au support (15A, 15B), et
- la direction d'étendue longitudinale de l'élément allongé du premier élément latéral (9) est essentiellement parallèle à la direction d'étendue longitudinale de l'élément allongé du deuxième élément latéral (10).

5. Connecteur multifonction (1) selon l'une quelconque des revendications 2 à 4, dans lequel le mécanisme à parallélogramme (6) comprend en outre :
- un élément rotatif (12) fixé au premier élément d'accueil (2) et pouvant tourner par rapport au premier élément d'accueil (2) autour d'un premier axe (X) perpendiculaire au premier plan et au deuxième plan, et
- un élément intermédiaire (11) articulé audit premier élément latéral (9) et articulé à une partie excentrique dudit élément rotatif (12),
l'élément intermédiaire (11) étant relié au premier élément latéral (9) de telle manière que le premier élément latéral (9) est pivoté par rapport au premier élément d'accueil (2) par un mouvement de l'élément intermédiaire (11) dans le premier plan associé avec une rotation de l'élément rotatif (12) autour du premier axe (X), et
dans lequel l'élément intermédiaire (11) et l'élément rotatif (12) forment un mécanisme à genouillère dont le point mort est dépassé lors de la transition entre l'état ouvert et l'état fermé.

6. Connecteur multifonction (1) selon la revendication 5, dans lequel
- le mécanisme à parallélogramme (6) comporte un premier sous-mécanisme (6a) et un deuxième sous-mécanisme (6b) décalés l'un de l'autre dans une direction perpendiculaire au premier plan et au deuxième plan d'une troisième distance (D3) d'au moins 3 cm,
- chacun du premier sous-mécanisme (6a) et du deuxième sous-mécanisme (6b) comprend un premier élément latéral (9), un deuxième élément latéral (10), un élément intermédiaire (11) et un élément rotatif (12) , et
- l'élément rotatif (12) du premier sous-mécanisme (6a) et l'élément rotatif (12) du deuxième sous-mécanisme (6b) sont reliés entre eux par un arbre (14) qui s'étend selon le premier axe (X).

7. Connecteur multifonction (1) selon la revendication 5 ou 6, dans lequel le mécanisme à parallélogramme (6) comporte un logement pour un dispositif d'application de force (13), et l'élément rotatif (12) peut être entraîné en rotation autour du premier axe (X) au moyen du dispositif d'application de force (13).

8. Connecteur multifonction (1) selon l'une des revendications précédentes, dans lequel le premier élément d'accueil (2) est configuré pour accueillir au moins deux premiers éléments de liaison (20) et le deuxième élément d'accueil (3) est configuré pour accueillir au moins deux deuxièmes des éléments de liaison (21), dans lequel les directions de liaison des premiers éléments de liaison (20) et des deuxièmes éléments de liaison (21) sont alignées parallèlement les unes aux autres.

9. Connecteur multifonction (1A) selon l'une quelconque des revendications 2 à 8, dans lequel
- l'un parmi le premier élément d'accueil (2A) et le support (15A, 15B) comporte un manchon tubulaire (2d) orienté parallèlement à la direction de liaison du premier élément de liaison (20) et du deuxième élément de liaison (21), et
- l'autre du premier élément d'accueil (2A) et du support (15A, 15B) a un boulon (15A) aligné parallèlement à la direction de liaison du premier élément de liaison (20) et du deuxième élément de liaison (21) et traversant le manchon (2d).

10. Connecteur multifonction (1B) selon l'une quelconque des revendications 2 à 9, dans lequel
- le premier élément latéral (9) présente deux barres plates allongées (9d, 9e) disposées parallèlement l'une à l'autre, et
- le premier élément d'accueil (2B) a une barre plate allongée (2f) alignée dans la direction de liaison du premier élément de liaison (20) et du deuxième élément de liaison (21), qui s'étend à travers un espace entre les deux plats allongés des barres (9d, 9e) disposées parallèlement l'une à l'autre du premier élément latéral (9).

11. Connecteur multifonction (1) selon l'une des revendications précédentes, dans lequel le deuxième élément d'accueil (3) présente une section de préhension (3b).

12. Connecteur multifonction (1) selon l'une quelconque des revendications 2 à 11, dans lequel
- le support (15A, 15B) comporte deux boulons (15A),
- le deuxième élément d'accueil (3) comporte deux évidements (3c), et
- le deuxième élément d'accueil (3) peut être enfiché sur le support (15A, 15B) en plaçant les deux évidements (3c) sur les deux boulons (15A).

13. Connecteur multifonction (1) selon l'une quelconque des revendications précédentes, dans lequel
- le premier élément d'accueil (2) présente une première plaque (2a), dans laquelle au moins une première ouverture (4) destinée à accueillir le au moins un premier élément de liaison (20) est formée, et
- le deuxième élément d'accueil (3) comporte une deuxième plaque (3a), dans laquelle au moins une deuxième ouverture (5) destinée à accueillir le au moins un deuxième élément de liaison (21) est formée.

14. Ensemble destiné à être fixé à un véhicule tracteur, comportant un premier élément d'accueil (2) et un mécanisme à parallélogramme (6) pour un connecteur multifonction (1) selon l'une quelconque des revendications 1 à 13, dans lequel
- le premier élément d'accueil (2) présente une première plaque (2a) avec au moins une première ouverture (4) destinée à accueillir un premier élément de liaison (20), et
- le mécanisme à parallélogramme (6) est articulé sur le premier élément d'accueil (2) et est agencé pour déplacer, de manière sensiblement linéaire le long d'une direction de liaison du premier élément de liaison (20) et du deuxième élément de liaison (21), un deuxième élément d'accueil (3) pouvant être fixé de manière amovible au mécanisme à parallélogramme (6) pour accueillir au moins un deuxième élément de liaison (21).
